# EUROPEAN PATENT APPLICATION

(11) **EP 4 293 870 A1**
(43) Date of publication of application: **20.12.2023**
(21) Application number: 22858572.5
(22) Date of filing: 27.04.2022
(51) Int. Cl.: H02J 50/00, H02J 50/20, H02J 50/80, H02J 7/00, H02J 9/00, H04W 4/80, G06F 3/14

(54) **ELECTRONIC DEVICE AND OPERATION METHOD THEREOF**

(30) Priority: 18.08.2021 KR 20210108958
(71) Applicant: Samsung Electronics Co., Ltd., Suwon-si, Gyeonggi-do 16677 (KR)
(72) Inventor: LEE, Hyungyong, Suwon-si, Gyeonggi-do 16677 (KR); KANG, Yongjin, Suwon-si, Gyeonggi-do 16677 (KR); SEO, Jehwan, Suwon-si, Gyeonggi-do 16677 (KR); OH, Sanggi, Suwon-si, Gyeonggi-do 16677 (KR)
(74) Representative: Appleyard Lees IP LLP
(86) International application number: PCT/KR2022/006032
(87) International publication number: WO 2023/022330

(57) **Abstract**

A method of operating an electronic device includes: determining whether to charge a mobile terminal based on the electronic apparatus operating in a standby mode; and transmitting a charge signal to the mobile terminal based on determining to charge the mobile terminal, wherein a Bluetooth low energy (BLE) signal received from the mobile terminal is used in the determining of whether to charge the mobile terminal.

## Description

### [Technical Field]

The disclosure relates to an electronic device and an operating method thereof, and for example, to an electronic device for charging a mobile terminal and an operating method of the electronic device.

### [Background Art]

Use of small electronic devices such as Internet of things (IoT) devices that are driven by low power energy has increased. Small electronic devices may be charged in a wired manner using a cable, such a universal serial bus (USB), etc., or may be charged wirelessly by contacting a wireless charging device, etc.

A technique for harvesting and usefully using energy discarded in everyday life is referred to as an "energy harvesting" technique. The energy harvesting technique may be used in daily life to charge small electronic devices driven by low power energy corresponding to a milliwatt (mW) level.

Research is being conducted into a method, according to which, when an electronic device does not use energy, the electronic device transmits the energy to a small electronic device that is required to be charged, so as to automatically charge the small electronic device.

### [Disclosure]

### [Technical Solution]

Embodiments of the disclosure provide an electronic device for charging a mobile terminal when the electronic device operates in a standby mode, and an operating method of the electronic device.

### [Description of Drawings]

The above and other aspects, features and advantages of certain embodiments of the present disclosure will be more apparent from the following detailed description, taken in conjunction with the accompanying drawings, in which:
FIG. 1 is a diagram illustrating an example operation in which an electronic device charges a mobile terminal when the electronic device operates in a standby mode, according to various embodiments;
FIG. 2 is a diagram illustrating an example operation in which an electronic device determines whether or not to charge a mobile terminal, according to various embodiments;
FIG. 3 is a block diagram illustrating an example operation in which an electronic device performs wireless communication with a mobile terminal, according to various embodiments;
FIG. 4 is a block diagram illustrating an example configuration of an electronic device according to various embodiments;
FIG. 5 is a block diagram illustrating an example configuration of an electronic device according to various embodiments;
FIG. 6 is a block diagram illustrating an example configuration of a mobile terminal according to various embodiments;
FIG. 7 is a diagram illustrating an example user interface screen, through which an electronic device receives an input with respect to selection of whether or not to automatically charge a mobile terminal, according to various embodiments;
FIG. 8 is a signal flow diagram illustrating an example operation of an electronic device, according to various embodiments;
FIG. 9 is a signal flow diagram diagram illustrating an example operation of an electronic device, according to various embodiments;
FIG. 10 is a signal flow diagram illustrating an example operation of an electronic device, according to various embodiments;
FIG. 11 is a signal flow diagram illustrating an example operation of an electronic device, according to various embodiments;
FIG. 12 is a flowchart illustrating an example process in which an electronic device transmits a charge signal, according to various embodiments;
FIG. 13 is a flowchart illustrating an example process in which an electronic device operates using a timer, according to various embodiments; and
FIG. 14 is a flowchart illustrating an example process in which an electronic device suspends transmission of a charge signal, according to various embodiments.

### [Mode for Invention]

Embodiments of the disclosure provide an electronic device for determining whether or not to charge a mobile terminal based on a Bluetooth low energy (BLE) signal received from the mobile terminal and an operating method of the electronic device.

Embodiments of the disclosure provide an electronic device for charging a mobile terminal by transmitting a Wi-Fi signal to the mobile terminal and an operating method of the electronic device.

According to an example embodiment of the disclosure, a method of operating an electronic apparatus includes: determining whether to charge a mobile terminal based on the electronic apparatus operating in a standby mode; and transmitting a charge signal to the mobile terminal, based on a determination to charge the mobile terminal, wherein a Bluetooth low energy (BLE) signal received from the mobile terminal is used in determining whether to charge the mobile terminal.

The determining of whether to charge the mobile terminal may include: obtaining at least one of battery information or BLE signal strength information from the BLE signal; and determining whether to charge the mobile terminal using the at least one of the battery information or the BLE signal strength information.

The determining of whether to charge the mobile terminal using the battery information may include, based on a remaining battery capacity based on the battery information being less than a specified amount, determining to charge the mobile terminal, and the determining of whether to charge the mobile terminal using the BLE signal strength information may include, based on a BLE signal strength based on the BLE signal strength information being greater than a specified strength, determining to charge the mobile terminal.

The BLE signal may include a first BLE signal received from the mobile terminal while the electronic device operates in a normal mode before the electronic device operates in the standby mode.

The first BLE signal may comprise a BLE signal received first from the mobile terminal after the electronic device is connected with the mobile terminal through a BLE communication network, while the electronic device operates in the normal mode.

The BLE signal may include a second BLE signal received from the mobile terminal while the electronic device operates in the standby mode.

The method may further include: outputting a user interface screen to receive an input of selection with respect to whether to automatically charge the mobile terminal; and receiving an input to automatically charge the mobile terminal, based on the user interface screen, wherein the determining of whether to charge the mobile terminal is performed, based on the input to automatically charge the mobile terminal.

The transmitting of the charge signal may include transmitting a Wi-Fi signal having an output level greater than or equal to a specified value.

The method may further include adjusting the output level of the Wi-Fi signal based on the BLE signal strength information.

The method may further include: setting, using a timer, a time at which the charge signal is transmitted; and re-determining whether to continually transmit the charge signal to the mobile terminal, based on the time set using the timer elapsing.

The method may further include: detecting an event of suspension of the charge signal transmission, while transmitting the charge signal; and suspending the transmission of the charge signal, based on the detection of the event of suspension of the charge signal transmission, wherein the event of suspension of the charge signal transmission includes one or more from among an event in which the electronic device performs Wi-Fi communication, an event in which the electronic device is switched from the standby mode to a different mode, an event in which a remaining battery capacity of the mobile terminal is identified to be greater than or equal to a specified amount, and an event in which a strength of the BLE signal from the mobile terminal is identified to be less than or equal to a specified strength.

According to an example embodiment of the disclosure, an electronic device includes: a communicator comprising communication circuitry; a memory storing one or more instructions; and a processor configured to execute the one or more instructions stored in the memory, wherein the communicator is configured to: determine whether to charge a mobile terminal, based on the electronic apparatus operating in a standby mode; and transmit a charge signal to the mobile terminal, based on determining to charge the mobile terminal, wherein the communicator is further configured to determine whether to charge the mobile terminal using a Bluetooth low energy (BLE) signal received from the mobile terminal.

According to an example embodiment of the disclosure, a non-transitory computer-readable recording medium has recorded thereon a program for executing operations of an electronic device, the operations including: determining whether to charge a mobile terminal, based on the electronic apparatus operating in a standby mode; and transmitting a charge signal to the mobile terminal, based on determining to charge the mobile terminal, wherein a Bluetooth low energy (BLE) signal received from the mobile terminal is used in the determining of whether to charge the mobile terminal.

An electronic device and an operating method thereof according to various example embodiments of the disclosure, a mobile terminal may be charged by the electronic device, when the electronic device operates in a standby mode.

An electronic device and an operating method thereof according to various example embodiments of the disclosure, whether to charge a mobile terminal may be determined by the electronic device based on a Bluetooth low energy (BLE) signal received from the mobile terminal.

An electronic device and an operating method thereof according to various example embodiments of the disclosure, a mobile terminal may be charged by the electronic device by transmitting a Wi-Fi signal to the mobile terminal.

Throughout the disclosure, the expression "at least one of a, b or c" indicates only a, only b, only c, both a and b, both a and c, both b and c, all of a, b, and c, or variations thereof.

Hereinafter, various example embodiments of the disclosure will be described in detail with reference to the accompanying drawings. However, the disclosure may have different forms and should not be construed as being limited to the embodiments described herein.

The terms used in the embodiments are selected from among common terms that are currently widely used, in consideration of their function in the embodiments. However, the terms may become different according to an intention of one of ordinary skill in the art, a precedent, or the advent of new technology. Therefore, the terms used in the embodiments should not be interpreted merely as the terms, but the terms should be interpreted based on the meaning of the terms and content throughout the embodiments.

The terms used in this disclosure are merely used to describe the embodiments and are not intended to limit the embodiments.

Throughout the disclosure, when a part is referred to as being "connected" to other parts, the part may be "directly connected" to the other parts or may be "electrically connected" to the other parts with other devices therebetween.

The expression such as "the" and other similar referring expressions used in this disclosure, particularly, the claims, may refer to both singular and plural elements. Unless orders of operations for describing the method according to embodiments are clearly described, the operations may be performed in appropriate orders. The disclosure is not limited to the described orders of the operations.

The expressions such as "in various embodiments," "according to an embodiment of the disclosure," and the like, described in various parts of this disclosure do not necessarily refer to the same element as one another.

One or more embodiments of the disclosure may be described as functional block components and various processing operations. All or part of such functional blocks may be realized by any number of hardware and/or software components configured to perform the specified functions. For example, the functional blocks of the disclosure may be implemented with one or more micro-processors or with circuit structures for certain functions. Also, for example, the functional blocks of the disclosure may be implemented with various programming or scripting languages. The functional blocks may be implemented with algorithms executed by one or more processors. Furthermore, the disclosure could employ conventional techniques for electronics configuration, signal processing and/or data control. The words "mechanism," "element," and "component" are used broadly and are not limited to mechanical or physical embodiments.

Furthermore, the connecting lines, or connectors shown in the drawings are intended to represent example functional relationships and/or physical or logical couplings between the various elements. It should be noted that many alternative or additional functional relationships, physical connections or logical connections may be present in a practical device.

Also, the terms, such as "unit" or "module," used in the disclosure, should be understood as a unit that processes at least one function or operation and that may be embodied in a hardware manner, a software manner, or a combination of the hardware manner and the software manner.

Also, in the disclosure, the term "user" may denote a person controlling a function or an operation of an electronic device and/or a mobile terminal using the electronic device and/or the mobile terminal and may include a viewer, a consumer, a manager, or an installation engineer.

Hereinafter, the disclosure is described in greater detail with reference to the accompanying drawings.

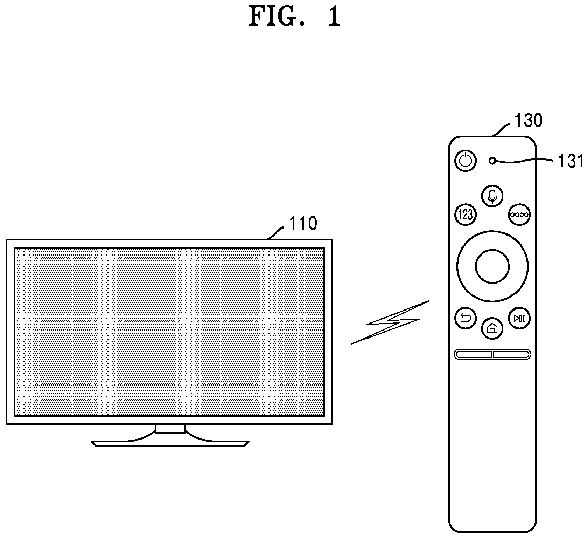

FIG. 1 is a diagram illustrating an example operation in which an electronic device 110 charges a mobile terminal while the electronic device 110 operates in a standby mode, according to various embodiments.

According to an embodiment of the disclosure, the electronic device 110 may include all electronic devices that may be connected to another electronic device through a wireless communication network.

According to an embodiment of the disclosure, the electronic device 110 may include all electronic devices that may transmit and receive predetermined (specified) data to and from at least one electronic device adjacent to the electronic devices, may perform pairing with at least one electronic device adjacent to the electronic devices, may remotely control at least one electronic device adjacent to the electronic devices, or may be remotely controlled by at least one electronic device adjacent to the electronic devices, through a wireless communication network.

According to an embodiment of the disclosure, the electronic device 110 may include all electronic devices that may be connected to a peripheral device through a Bluetooth low energy (BLE) communication network.

According to an embodiment of the disclosure, the electronic device 110 may be connected to an electronic device which is movable, such as a mobile electronic device, through the BLE communication network. For example, the electronic device 110 may receive or scan a BLE signal transmitted from the mobile electronic device.

According to an embodiment of the disclosure, the electronic device 110 may transmit and receive a radio frequency signal to and from a peripheral device using a wireless local area network (WLAN). According to an embodiment of the disclosure, the electronic device 110 may transmit and receive a Wi-Fi signal to and from the peripheral device through a Wi-Fi communication network. For example, the electronic device 110 may receive and display various content provided by a video on demand (VOD) service provider, using the WLAN.

According to an embodiment of the disclosure, the electronic device 110 may operate in a standby mode or a normal mode, based on whether or not a component included in the electronic device 110 operates or not.

The standby mode may be a mode in which power of the electronic device 110 is saved. In the standby mode, power may be supplied only to a communicator (not shown) of the electronic device 110 and may be blocked to other components. Thus, in the standby mode, only a network function, for example, of the electronic device 110 may operate. In the standby mode, the electronic device 110 may receive a control signal from an external device, for example, a mobile terminal 130, or may transmit and receive predetermined data to and from the mobile terminal 130. The standby mode may also be referred to as a suspend mode or a low power mode (LPM).

The normal mode may denote a state in which power is supplied to all components of the electronic device 110. In the normal mode, all components of the electronic device 110 normally operate, and thus, a user may normally use the electronic device 110 for each function, such as viewing content through the electronic device 110.

FIG. 1 illustrates that the electronic device 110 operates in the standby mode. As illustrated in FIG. 1, the electronic device 110 may not output any image on a display, when the electronic device 110 operates in the standby mode. In this case, the display may be black.

According to an embodiment of the disclosure, when the electronic device 110 operates in the standby mode, the electronic device 110 may determine whether or not to charge the mobile terminal 130. As used herein, the term "whether or not" includes simply "whether" and does not necessarily imply or require that the determination of both "whether" and/or "not" be made.

According to an embodiment of the disclosure, the mobile terminal 130 may be a mobile electronic device that is movable. For example, the mobile terminal 130 may include at least one of a smartphone, a remote controller, a tablet personal computer (PC), a mobile phone, a video calling phone, an electronic-book (e-book) reader, a laptop PC, a netbook computer, a digital camera, a personal digital assistant (PDA), a portable multimedia player (PMP), a camcorder, a navigation device, a wearable device, a smart watch, a home network device, a security device, or a medical device.

According to an embodiment of the disclosure, the mobile terminal 130 may be a small device. According to an embodiment of the disclosure, the mobile terminal 130 may correspond to a type of Internet of things (IoT) device having a sensor attached thereon and capable of communication with the electronic device 110. For example, the mobile terminal 130 may include various mobile objects capable of Internet communication, such as glasses or a bracelet, or various forms of mobile home appliance products. In this case, a wireless communication tag may be mounted in the mobile terminal 130, and the mobile terminal 130 may perform communication with the electronic device 110.

FIG. 1 illustrates an example in which the mobile terminal 130 is a remote controller. The mobile terminal 130 may include a plurality of keys. The keys may be used to input numbers or text as well as various functional information.

According to an embodiment of the disclosure, the mobile terminal 130 may further include a charge indicator 131. The charge indicator 131 may be an indicator configured to notify a charge state of the mobile terminal 130. For example, when the mobile terminal 130 is being currently charged, the charge indicator 131 may indicate that the mobile terminal 130 is being charged, using a color of light, a flickering cycle of light, or the like.

According to an embodiment of the disclosure, the mobile terminal 130 may be connected with the electronic device 110 through a wireless communication network.

According to an embodiment of the disclosure, the mobile terminal 130 may be located within a predetermined distance from the electronic device 110 and may perform communication with the electronic device 110 through a BLE communication network.

According to an embodiment of the disclosure, the electronic device 110 may determine whether or not to charge the mobile terminal 130. According to an embodiment of the disclosure, the electronic device 110 may determine whether or not to charge the mobile terminal 130 using a BLE signal received from the mobile terminal 130. In greater detail, the electronic device 110 may obtain at least one of battery information or BLE signal strength information of the mobile terminal 130, from the BLE signal received from the mobile terminal 130. The electronic device 110 may determine whether or not to charge the mobile terminal 130 using the at least one of the battery information or the BLE signal strength information.

In detail, when the electronic device 110 determines to charge the mobile terminal 130 using the battery information, the electronic device 110 may determine to charge the mobile terminal 130 when the remaining battery based on the battery information is less than a criterion amount. When the electronic device 110 determines to charge the mobile terminal using the BLE signal strength information, the electronic device 110 may determine to charge the mobile terminal when a BLE signal strength based on the BLE signal strength information is greater than a criterion strength.

According to an embodiment of the disclosure, the BLE signal used by the electronic device 110 to determine whether or not to charge the mobile terminal 130 may include a BLE signal that the electronic device 110 receives from the mobile terminal 130 while the electronic device operates in the normal mode before the electronic device 110 operates in the standby mode. When the BLE signal that the electronic device 110 receives from the mobile terminal 130 while the electronic device 110 operates in the normal node is a first BLE signal, the first BLE signal may include a BLE signal that is received first from the mobile terminal 110 after the electronic device_110 is connected with the mobile terminal 130 through a BLE communication network after the electronic device 110 enters into the normal mode.

According to an embodiment, the BLE signal used by the electronic device 110 to determine whether or not to charge the mobile terminal 130 may include a BLE signal that the electronic device 110 receives from the mobile terminal 130 while the electronic device operates in the standby mode. When the BLE signal received from the mobile terminal 130 when the electronic device 110 operates in the standby mode is a second BLE signal, the electronic device 110 may determine whether or not to charge the mobile terminal 130 using the second BLE signal.

According to an embodiment of the disclosure, the electronic device 110 may output a user interface screen for receiving an input of selection with respect to whether or not to perform automatic charging of the mobile terminal. When it is selected to perform automatic charging of the mobile terminal through the user interface screen, the electronic device 110 may determine whether or not to charge the mobile terminal, when the electronic device 110 operates in the standby mode.

According to an embodiment of the disclosure, when the electronic device 110 determines to charge the mobile terminal 130, the electronic device 110 may transmit a radio frequency signal that is greater than or equal to a predetermined size to the mobile terminal 130.

According to an embodiment of the disclosure, the electronic device 110 may transmit a Wi-Fi signal to the mobile terminal 130 as a charge signal.

According to an embodiment of the disclosure, the electronic device 110 may transmit a Wi-Fi signal having an output level that is greater than or equal to a criterion value to the mobile terminal 130 as a charge signal.

According to an embodiment of the disclosure, the electronic device 110 may adjust an output level of the Wi-Fi signal based on the BLE signal strength information. For example, when the BLE signal strength is great, the electronic device 110 may lower the output level of the charge signal transmitted to the mobile terminal 130, and when the BLE signal strength is little, the electronic device 110 may raise the output level of the charge signal transmitted to the mobile terminal 130.

According to an embodiment of the disclosure, the electronic device 110 may set a time until which the charge signal is transmitted with a timer. The electronic device 110 may continually transmit the charge signal to the mobile terminal 130 until the time that is set with the timer, and when the time that is set with the timer elapses, the electronic device 110 may determine again whether or not to transmit the charge signal to the mobile terminal 130.

According to an embodiment of the disclosure, the electronic device 110 may detect an event for suspension of the charge signal transmission, while transmitting the charge signal. The electronic device 110 may suspend the transmission of the charge signal based on the detection of the event for suspension of the charge signal transmission.

According to an embodiment of the disclosure, the event for suspension of the charge signal transmission may include one or more from among an event in which the electronic device 110 performs Wi-Fi communication, an event in which the electronic device 110 is switched into another mode from the standby mode, an event in which the electronic device 110 identifies remaining battery of the mobile terminal 130 that is greater than or equal to a specified amount, and an event in which the electronic device 110 identifies a strength of the BLE signal from the mobile terminal 130, which is less than or equal to a specified strength.

According to an embodiment of the disclosure, the mobile terminal 130 may receive the radio frequency signal transmitted by the electronic device 110. The mobile terminal 130 may receive the radio frequency signal from the electronic device 110 and may convert the radio frequency signal into an electrical signal and may perform energy harvesting.

When the mobile terminal 130 receives the radio frequency signal for charging from the electronic device 110, the mobile terminal 130 may indicate that the mobile terminal 130 is currently being charged, using the charge indicator 131.

As described above, according to an embodiment of the disclosure, when a user is not using the electronic device 110, that is, when the electronic device 110 operates in the standby mode, the electronic device 110 may automatically and wirelessly charge the mobile terminal 130. Thus, without causing inconvenience for the user, the electronic device 110 may use energy that is not used in order to charge the mobile terminal 130, and thus, energy may be efficiently used.

According to an embodiment of the disclosure, the electronic device 110 may transmit the radio frequency signal to the mobile terminal 130 using a WLAN used to transmit and receive a radio frequency signal to and from another peripheral device. Thus, the electronic device 110 may charge the mobile terminal 130 without using an additional device for charging.

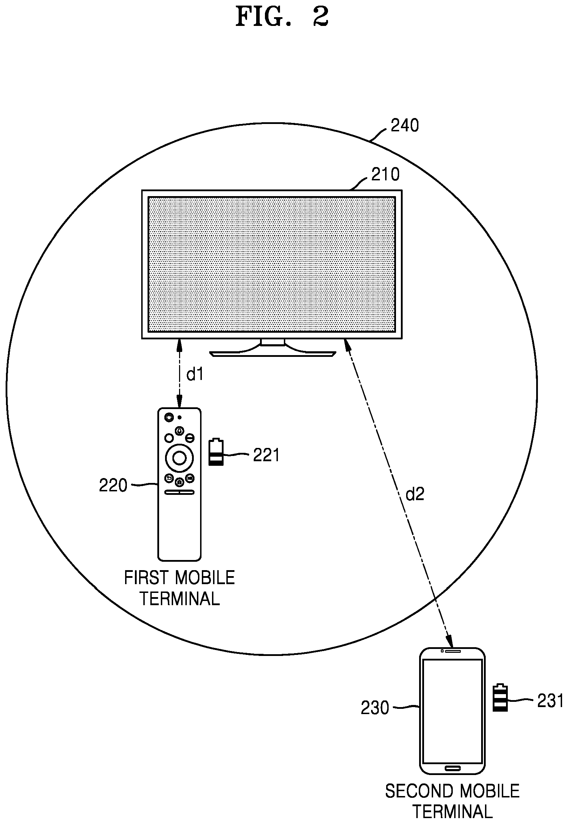

FIG. 2 is a diagram illustrating an example operation in which an electronic device 210 determines whether to charge a mobile terminal, according to various embodiments.

According to an embodiment of the disclosure, the electronic device 210 corresponds to an image display apparatus. The image display apparatus may be an apparatus configured to visually display contents, advertisement, guide information, or a user interface screen for a user. The image display apparatus may include various types of apparatuses, such as a digital television, a digital broadcasting terminal, etc. The image display apparatus may include displays mounted on a front surface of a device, such as a refrigerator, a laundry machine, or other home appliance products.

According to an embodiment of the disclosure, the electronic device 210 may be arranged in a predetermined space as a fixed type.

According to an embodiment of the disclosure, the electronic device 210 may include a plurality of communication modules. According to an embodiment of the disclosure, the electronic device 210 may include a BLE communication module (not shown) communicating according to a BLE communication method and a Wi-Fi communication module (not shown) communicating according to a Wi-Fi communication method.

According to an embodiment of the disclosure, first and second mobile terminals 220 and 230 may also include the BLE communication module or a chip (not shown) for performing BLE communication with the electronic device 210. According to an embodiment of the disclosure, the first and second mobile terminals 220 and 230 may include a reception-exclusive antenna (not shown) for receiving a Wi-Fi signal from the electronic device 210.

According to an embodiment of the disclosure, the electronic device 210 may search for a peripheral device using the BLE communication module, while operating in a standby mode. BLE has a relatively less duty cycle than the Bluetooth standards by having a duty cycle of about several milliseconds (ms) and also has less power consumption. Thus, the electronic device 210 may continually scan the peripheral device in the standby mode using the BLE communication module.

According to an embodiment of the disclosure, while the electronic device 210 operates in the standby mode, the electronic device 210 may recognize BLE signals transmitted from the first and second mobile terminals 220 and 230. The electronic device 210 may scan the BLE signal constantly or for each arbitrary time point.

The BLE signal may have various forms, such as a BLE packet, iBeacon, etc. Thus, when the electronic device 210 receives the BLE signal, the BLE signal received by the electronic device 210 may include any of those various forms, such as the BLE packet, the iBeacon, etc.

According to an embodiment of the disclosure, when the electronic device 210 operates in the standby mode, the electronic device 210 may determine whether or not to charge a peripheral device.

According to an embodiment of the disclosure, the electronic device 210 may scan a BLE signal from each of the first and second mobile terminals 220 and 230 in the vicinity of the electronic device 210. The electronic device 210 may determine whether or not to charge the first and second mobile terminals 220 and 230 based on the BLE signals respectively received from the first and second mobile terminals 220 and 230.

According to an embodiment of the disclosure, the electronic device 210 may obtain battery information from the BLE signals received from the first and second mobile terminals 220 and 230.

According to an embodiment of the disclosure, the BLE signals transmitted from the first and second mobile terminals 220 and 230 may include the battery information. The battery information may be information indicating battery states of the first and second mobile terminals 220 and 230. The battery information may include at least one of remaining battery information or battery life information. The battery life information may denote a duration time of a battery. The battery information may further include battery capacitance information.

According to an embodiment of the disclosure, the electronic device 210 may obtain the battery information from the BLE signals and may identify battery states of the first and second mobile terminals 220 and 230 based on the battery information.

For convenience of explanation, FIG. 2 visually displays the remaining batteries of the first and second mobile terminals 220 and 230 around the first and second mobile terminals 220 and 230. To compare remaining battery information 221 of the first mobile terminal 220 and remaining battery information 231 of the second mobile terminal 230, it is identified that the second mobile terminal 230 has more remaining battery than the first mobile terminal 220.

According to an embodiment of the disclosure, the first mobile terminal 220 may identify the remaining battery, etc. of the first mobile terminal 220, generate the battery information based on the identification, and include the battery information in the transmitted BLE signal. For example, when the BLE signal transmitted by the first mobile terminal 220 includes a BLE advertising packet (BLE Adv.), the first mobile terminal 220 may include the battery information in user designation data within the BLE Adv.

Likewise, the second mobile terminal 230 may generate the battery information indicating the remaining battery of the second mobile terminal 230 and include the battery information in the transmitted BLE signal.

According to an embodiment of the disclosure, the electronic device 210 may obtain the battery information from the BLE signals received from the first and second mobile terminals 220 and 230 and may identify the battery states of the first and second mobile terminals 220 and 230 based on the obtained battery information. According to an embodiment of the disclosure, the electronic device 210 may determine to charge a mobile terminal, the remaining battery of which is less than a specified amount. For example, when the specified amount for determining whether or not to charge the battery is 70%, the electronic device 210 may determine a mobile terminal, the remaining battery of which is less than or equal to 70%, as an object to be charged.

According to an embodiment of the disclosure, when both of the first mobile terminal 220 and the second mobile terminal 230 have remaining batteries that are less than the specified amount, the electronic device 210 may identify the mobile terminal having less remaining battery than the other and determine the identified mobile terminal as the object to be charged.

According to an embodiment of the disclosure, the electronic device 210 may obtain BLE signal strength information from the BLE signals received from the first and second mobile terminals 220 and 230.

According to an embodiment of the disclosure, the BLE signals transmitted from the first and second mobile terminals 220 and 230 may include the BLE signal strength information. The BLE signal strength information may be, for example, received signal strength indication (RSSI) information. According to an embodiment of the disclosure, the BLE signals transmitted by the first and second mobile terminals 220 and 230 may include the RSSI information in a BLE packet. The electronic device 210 may obtain the RSSI information from the BLE signals transmitted by the first and second mobile terminals 220 and 230.

According to an embodiment, the BLE signals transmitted by the first and second mobile terminals 220 and 230 may not include the RSSI information. In this case, the electronic device 210 may directly obtain the BLE signal strength information from the BLE signal using the BLE communication module. To this end, the BLE communication module included in the electronic device 210 may include an RSSI device. The RSSI device may obtain the RSSI information with respect to a signal from a peripheral device.

In general, a BLE signal strength is inversely proportional to a distance. An RSSI value may be measured in units of decibels (dBM) at a log scale and may have a negative value. As the RSSI value has a greater negative value, it indicates that a peripheral device is farther away. For example, when a measured RSSI value is between -20 and -30 dBM, it may indicate that a peripheral device is near, and when the measured RSSI value is -120 dBm, it may indicate that the peripheral device is proximate to the sensing limit.

Referring to FIG. 2, it is identified that the first mobile terminal 220 and the second mobile terminal 230 are spaced apart from the electronic device 210 by different distances from each other. For example, the first mobile terminal 220 is apart from the electronic device 210 by a distance d1, and the second mobile terminal 230 is apart from the electronic device 210 by a distance d2. Because the distances d1 and d2 are different from each other, the RSSI information that the electronic device 210 obtains from the BLE signal transmitted from the first mobile terminal 220 is different from the RSSI information that the electronic device 210 obtains from the BLE signal transmitted from the second mobile terminal 230.

According to an embodiment of the disclosure, based on the RSSI information, for example, the BLE signal strength information, the electronic device 210 may determine whether or not the first and second mobile terminals 220 and 230 are within a proximate region 240 that is proximate to the electronic device 210. The proximate region 240 may be a specified region used by the electronic device 210 to determine whether or not to charge the first and second mobile terminals 220 and 230. For example, the proximate region 240 may denote a region within a predetermined proximate distance from a current location of the electronic device 210. That is, the proximate region 240 may denote a region, in which the BLE signal strength obtained by the electronic device 210 is greater than or equal to a specified strength.

When the electronic device 210 charges a mobile terminal far away, the efficiency of transmitting a charge signal may decrease. Thus, according to an embodiment of the disclosure, the electronic device 210 may transmit the charge signal only to a mobile terminal within the proximate region 240, so that energy harvesting may be efficiently performed.

While the electronic device 210 transmits the charge signal, the electronic device 210 may, periodically or intermittently, continue to measure the BLE signal strength from the mobile terminal. When a mobile terminal that is being charged moves beyond the proximate region 240 and has a BLE signal strength that is less than the specified strength, the electronic device 210 may stop transmitting the charge signal to the mobile terminal.

According to an embodiment of the disclosure, the electronic device 210 may determine that the first mobile terminal 220 is within the proximate region 240, based on the BLE signal strength information of the first mobile terminal 220. According to an embodiment of the disclosure, the electronic device 210 may determine that the second mobile terminal 230 is not within the proximate region 240, based on the BLE signal strength information of the second mobile terminal 230. For example, when the BLE signal strength information of the second mobile terminal 230 indicates a BLE signal strength that is less than a predetermined specified strength, the electronic device 210 may determine that the second mobile terminal 230 is beyond the proximate region 240.

According to an embodiment of the disclosure, the electronic device 210 may obtain the BLE signal strength information from the BLE signals received from the first and second mobile terminals 220 and 230 and, based on the BLE signal strength information, may determine the first mobile terminal 220 having a BLE signal strength that is greater than or equal to the specified strength as an object to be charged.

FIG. 2 illustrates the case in which only the BLE signal strength of the first mobile terminal 220 is greater than the specified strength, as an example. However, there may be cases in which the BLE signal strength of the second mobile terminal 230 is also greater than the specified strength. For example, when BLE signal strengths of a plurality of mobile terminals are greater than the specified strength, the electronic device 210 may determine a mobile terminal having the greatest signal strength as an object to be charged. As a mobile terminal has a greater signal strength, the mobile terminal may be nearer to the electronic device 210, and thus, the efficiency of transmitting the charge signal may also increase.

According to an embodiment of the disclosure, the electronic device 210 may obtain both of the battery information and the BLE signal strength information from the BLE signals received from the first and second mobile terminals 220 and 230 and may determine a mobile terminal having a remaining battery capacity that is less than or equal to a specified amount and a BLE signal strength that is greater than or equal to a specified strength, as an object to be charged.

As described above, according to an embodiment of the disclosure, the electronic device 210 may receive the BLE signals from the peripheral first and second mobile terminals 220 and 230 and may obtain at least one of the battery information or the BLE signal strength information from the BLE signals.

According to an embodiment of the disclosure, the electronic device 210 may determine whether or not to charge the first and second mobile terminals 220 and 230 based on the at least one of the battery information or the BLE signal strength information.

According to an embodiment of the disclosure, the electronic device 210 may determine a mobile terminal having the remaining battery that is less than the specified amount, as an object to be charged.

According to an embodiment of the disclosure, the electronic device 210 may determine a mobile terminal having the BLE signal strength that is greater than the specified strength, as an object to be charged.

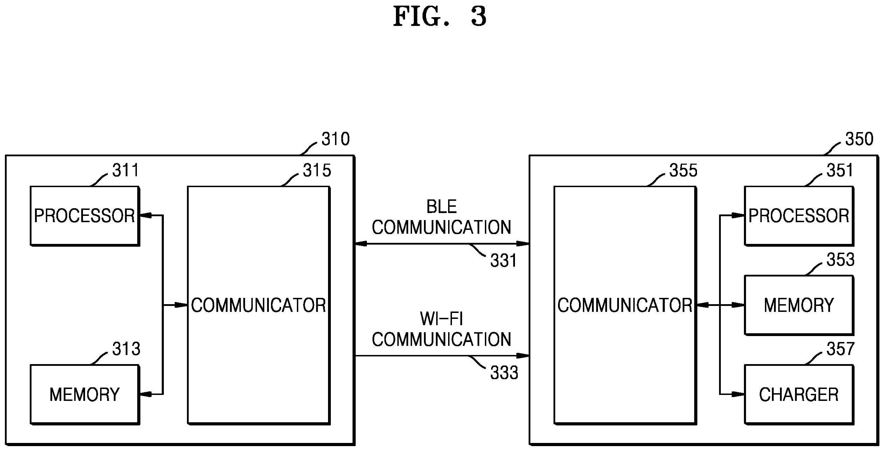

FIG. 3 is a block diagram illustrating an example operation in which an electronic device 310 and a mobile terminal 350 perform wireless communication, according to various embodiments.

Referring to FIG. 3, the electronic device 310 and the mobile terminal 350 may perform BLE communication 331 through a BLE communication network.

Hereinafter, the electronic device 310 is described first.

According to an embodiment of the disclosure, the electronic device 310 may be implemented with various forms of devices capable of communicating with a peripheral device. The electronic device 310 may, for example, include a processor (e.g., including processing circuitry) 311, a memory 313, and a communicator (e.g., including communication circuitry) 315.

The processor 311 may include various processing circuitry and control general operations of the electronic device 310.

The memory 313 may store at least one instruction. The memory 313 may store at least one program executed by the processor 311. The memory 313 may store pre-defined operation principles or programs. Also, the memory 313 may store data input to the electronic device 310 or output from the electronic device 310.

The memory 313 may include at least one type of storage medium from among a flash-type memory, a hard disk-type memory, a multimedia card micro-type memory, a card-type memory (for example, an SD or an XD memory), random-access memory (RAM), static RAM (SRAM), read-only memory (ROM), electrically erasable programmable ROM (EEPROM), programmable ROM (PROM), a magnetic memory, a magnetic disk, and an optical disk.

According to an embodiment of the disclosure, when the electronic device 310 obtains mobile terminal identification information by performing BLE pairing with the mobile terminal 350, the processor 311 may control the memory 313 to store the mobile terminal identification information.

The mobile terminal identification information may include a random address based on which a BLE address may be reconstructed using a predetermined encryption key. For example, when the mobile terminal identification information includes a random address of the mobile terminal 350, the electronic device 310 may convert the received random address into a "BLE address" that is an original address transmitted during the BLE pairing, using an identity resolving key (IRK) obtained during the BLE pairing.

According to an embodiment of the disclosure, the processor 311 may obtain at least one of battery information or BLE signal strength information from a BLE signal received from the mobile terminal 350 and may store the at least one of the battery information or the BLE signal strength information in the memory 313.

The communicator 315 according to an embodiment of the disclosure may include at least one communication module including various communication circuitry.

According to an embodiment of the disclosure, the communicator 315 may include a Wi-Fi communication module (not shown). The communicator 315 may perform Wi-Fi communication with a peripheral device, etc. using the Wi-Fi communication module.

That the communicator 315 performs the Wi-Fi communication may refer, for example, to the communicator 315 performing communication by transmitting and receiving data pre-defined in the Wi-Fi standards to and from the peripheral device according to a Wi-Fi communication method. While the electronic device 310 operates in a normal mode, the communicator 315 may perform Wi-Fi communication with the peripheral device.

There may be a case where, when the electronic device 310 operates in a standby mode and does not operate in the normal mode, the communicator 315 may perform Wi-Fi communication. For example, there may be a case where the electronic device 310 receives a control signal from a smartphone, additionally from the mobile terminal 350, when the electronic device 310 operates in the standby mode. For example, when the control signal that the electronic device 310 receives from the smartphone is a Wi-Fi signal, the communicator 315 may operate in response to the control signal.

As described above, when the communicator 315 performs Wi-Fi communication, the communicator 315 may not simultaneously transmit a Wi-Fi signal for charging to the mobile terminal 350, while performing the Wi-Fi communication. Thus, according to an embodiment of the disclosure, only when the electronic device 310 does not perform Wi-Fi communication, the communicator 315 may transmit a charge signal to the mobile terminal 350, but the disclosure is not limited thereto.

According to an embodiment of the disclosure, the communicator 315 may include a BLE communication module (not shown). The BLE communication module may constantly, periodically, at random time intervals, or at every pre-determined time point scan or receive a BLE signal transmitted from a peripheral device. Also, when the BLE communication module is connected with the mobile terminal 350 for BLE communication, the BLE communication module may constantly, periodically, at random time intervals, or at every pre-determined time point transmit and receive a BLE signal to and from the mobile terminal 350.

According to an embodiment of the disclosure, the electronic device 310 may operate in the normal mode or the standby mode.

According to an embodiment of the disclosure, when the electronic device 310 operates in the standby mode, the communicator 315 may determine whether or not to charge the mobile terminal 350.

According to an embodiment of the disclosure, the communicator 315 may determine whether or not to charge the mobile terminal 350 using a BLE signal received from the mobile terminal 350.

According to an embodiment of the disclosure, the processor 311 or the communicator 315 may obtain mobile terminal identification information from the BLE signal received from the mobile terminal 350. For example, the communicator 315 may identify whether or not the mobile terminal identification information is pre-stored in the memory 313 of the electronic device 310 or an internal memory (not shown) of the communicator 315. The communicator 315 may identify whether or not the mobile terminal 350 is a registered device, by comparing identification information of registered devices pre-stored in the memory 313 or the internal memory with the mobile terminal identification information. The communicator 315 may use the mobile terminal identification information to identify whether or not the mobile terminal 350 is a registered device, and when the mobile terminal 350 is the registered device, may determine whether or not to charge the mobile terminal 350.

According to an embodiment of the disclosure, the communicator 315 may obtain at least one of the battery information or the BLE signal strength information from the BLE signal received from the mobile terminal 350.

According to an embodiment of the disclosure, the communicator 315 may obtain the at least one of the battery information or the BLE signal strength information from the BLE signal received from the mobile terminal 350, while the electronic device 310 operates in the normal mode before operating in the standby mode.

When the electronic device 310 operates in the normal mode, the electronic device 310 may be connected with the mobile terminal 350 and may perform BLE communication. The electronic device 310 may transmit and receive a BLE signal to and from the mobile terminal 350 when the electronic device 310 is connected with the mobile terminal 350. For convenience of explanation, the BLE signal that the electronic device 310 receives from the mobile terminal 350 when the electronic device 310 operates in the normal mode is referred to as a first BLE signal.

While the electronic device 310 operates in the normal mode, the electronic device 310 may receive the first BLE signal and may obtain the battery information and/or the BLE signal strength information from the first BLE signal. The first BLE signal may include the BLE signal strength information indicated as an RSSI value.

The battery information and/or the BLE signal strength information obtained from the first BLE signal may be stored in the memory 313 or an internal memory (not shown) of the communicator 315. Thereafter, when the electronic device 310 is switched into the standby mode, the communicator 315 may rapidly determine whether or not to charge the mobile terminal 350, using the battery information and/or the BLE signal strength information stored in the memory 313 or the communicator 315.

According to an embodiment, the communicator 315 may determine whether or not to charge the mobile terminal 350, using a BLE signal that is received from the mobile terminal 350 after the electronic device 310 is switched into the standby mode.

When the electronic device 310 is in the standby mode, power may be supplied to the communicator 315. Thus, even when the electronic device 310 operates in the standby mode, the communicator 315 may receive the BLE signal from the mobile terminal 350. The BLE signal that the electronic device 310 receives from the mobile terminal 350 while the electronic device 310 operates in the standby mode is referred to as a second BLE signal so as to be distinguished from the first BLE signal that the electronic device 310 receives from the mobile terminal 350 when the electronic device 310 operates in the normal mode.

When the electronic device 310 is switched into the standby mode, the communicator 315 may cancel the BLE connection with the mobile terminal 350. After the mobile terminal 350 is disconnected from the electronic device 310, the mobile terminal 350 may transmit the second BLE signal to a peripheral device. The mobile terminal 350 may periodically transmit the second BLE signal to the peripheral device. The second BLE signal may include an BLE Adv. The BLE Adv. may be a packet that the mobile terminal 350 transmits to peripheral devices in order to notify the presence or a location of the mobile terminal 350.

According to an embodiment of the disclosure, the communicator 315 may obtain at least one of battery information or BLE signal strength information from the second BLE signal received from the mobile terminal 350 while the electronic device 310 operates in the standby mode. Unlike the first BLE signal, the second BLE signal may not specifically include the BLE signal strength information. In this case, the communicator 315 may directly obtain RSSI information from the second BLE signal using an RSSI device.

According to an embodiment of the disclosure, the communicator 315 may obtain the battery information and/or the BLE signal strength information from the second BLE signal and may use the obtained information to determine whether or not to charge the mobile terminal 350.

According to an embodiment of the disclosure, when the communicator 315 uses the battery information and a remaining battery capacity of the mobile terminal 350 is less than a specified amount, the communicator 315 may determine to charge the mobile terminal 350.

According to an embodiment of the disclosure, the communicator 315 may use the BLE signal strength information, and when a BLE signal strength is greater than or equal to a specified strength, the communicator 315 may determine that the mobile terminal 350 is within a proximate region and may determine to charge the mobile terminal 350.

According to an embodiment of the disclosure, the communicator 315 may take into account both the battery information and the BLE signal strength information, and only when the remaining battery is less than the specified amount and the BLE signal strength is greater than the specified strength, may determine to charge the mobile terminal 350.

According to an embodiment of the disclosure, when the communicator 315 determines to charge the mobile terminal 350, the communicator 315 may transmit a charge signal to the mobile terminal 350.

According to an embodiment of the disclosure, the charge signal may be a radio frequency signal having a level that is greater than or equal to a specified value. According to an embodiment of the disclosure, the communicator 315 may use a Wi-Fi signal having high output power as the charge signal.

According to an embodiment of the disclosure, the communicator 315 may adjust an output level of the Wi-Fi signal based on the BLE signal strength information. For example, when an RSSI value of the BLE signal received from the mobile terminal 350 is great, the communicator 315 may determine that the mobile terminal 350 is within a proximate region and may transmit the Wi-Fi signal to the mobile terminal 350 by adjusting the output level of the Wi-Fi signal to be relatively low. For example, when the mobile terminal 350 is within the proximate region, the communicator 315 may charge the mobile terminal 350 using a Wi-Fi signal having a relatively low output level. Thus, relatively low standby power may be maintained.

When the RSSI value of the BLE signal received from the mobile terminal 350 is little, the communicator 315 may adjust the output level of the Wi-Fi signal transmitted to the mobile terminal 350 to be relatively high so that the Wi-Fi signal may be transmitted well.

According to an embodiment of the disclosure, the communicator 315 may transmit a Wi-Fi signal having a level that is greater than or equal to a specified value to the mobile terminal 350 using a Wi-Fi communication module. According to an embodiment of the disclosure, the communicator 315 may transmit the Wi-Fi signal to the mobile terminal 350 according to Wi-Fi communication 333.

The communicator 315 may transmit the Wi-Fi signal to the mobile terminal 350 so that the mobile terminal 350 may perform energy harvesting.

Hereinafter, the mobile terminal 350 is described.

According to an embodiment of the disclosure, the mobile terminal 350 may be paired and connected with the electronic device 310 and may transmit a signal for controlling the electronic device 310 to the electronic device 310.

According to an embodiment of the disclosure, when the electronic device 310 enters into the standby mode, the mobile terminal 350 may cancel the BLE connection with the electronic device 310 and may receive a signal for charging from the electronic device 310 and perform a charging operation.

According to an embodiment of the disclosure, the mobile terminal 350 may be implemented with various forms of devices capable of performing communication with a peripheral device. The mobile terminal 350 may include a processor (e.g., including processing circuitry) 351, a memory 353, a communicator (e.g., including communication circuitry) 355, and a charger (e.g., including charging circuitry) 357.

The processor 351 may include various processing circuitry and control general operations of the mobile terminal 350. The processor 351 may be, for example, a micro controller unit (MCU). The processor 351 may execute at least one instruction or program stored in the memory 353 to control the mobile terminal 350 to operate.

According to an embodiment of the disclosure, the processor 351 or the communicator 355 may transmit a BLE signal by including at least one of battery information or BLE signal strength information in the BLE signal.

According to an embodiment of the disclosure, when an antenna (not shown) receives a Wi-Fi signal, the processor 351 or the communicator 355 may identify whether or not the received Wi-Fi signal has a level that is greater than or equal to a specified value. When the level of the Wi-Fi signal is greater than or equal to the specified value, the processor 351 or the communicator 355 may identify the received Wi-Fi signal as a charge signal. When the processor 351 or the communicator 355 determines the Wi-Fi signal as the charge signal, the processor 351 or the communicator 355 may control the charger 357 to perform a harvesting operation.

The memory 353 may store a program for processing and controlling operations by the processor 351. The memory 353 may store at least one instruction or program executed by the processor 351. The memory 353 may store data input to the mobile terminal 350 or output from the mobile terminal 350. The memory 353 may be, for example, a flash memory type.

The communicator 355 may include various communication circuitry and perform communication with peripheral devices. The communicator 355 may include a component for performing communication with other devices. The communicator 355 may include a short-range wireless communication unit.

According to an embodiment of the disclosure, the short-range wireless communication unit included in the communicator 355 may include a BLE communication unit. According to an embodiment of the disclosure, the communicator 355 may constantly, periodically, at random time intervals, or at every predetermined time point transmit a BLE signal to a peripheral device.

According to an embodiment of the disclosure, the BLE signal transmitted by the communicator 355 may include mobile terminal identification information, which is information for identifying the mobile terminal 350. The mobile terminal identification information may be information for identifying the mobile terminal 350 transmitting the BLE signal and may include a BLE address (for example, a BLE MAC address). The mobile terminal identification information may include a random address based on which a BLE address may be reconstructed using a predetermined encryption key.

According to an embodiment of the disclosure, the BLE signal transmitted by the communicator 355 may include battery information of the mobile terminal 350.

According to an embodiment of the disclosure, the BLE signal transmitted by the communicator 355 may include BLE signal strength information.

According to an embodiment of the disclosure, the BLE signal transmitted by the communicator 355 may include both of the battery information and the BLE signal strength information.

According to an embodiment of the disclosure, while the electronic device 310 operates in the normal mode, the communicator 355 may transmit the BLE signal including the battery information and/or the BLE signal strength information to the electronic device 310. For example, the communicator 355 may transmit the BLE signal including the battery information and/or the BLE signal strength information to the electronic device 310, when the electronic device 310 is connected with the communicator 355 for BLE communication after the electronic device 310 enters into the normal mode.

The communicator 355 may include the battery information and/or the BLE signal strength information in a BLE signal transmitted first to the electronic device 310 after the electronic device 310 and the communicator 355 are connected with each other for the BLE communication and may transmit the BLE signal including the battery information and/or the BLE signal strength information. That is, whenever the communicator 355 is connected with the electronic device 310 for BLE communication, the communicator 355 may only once include the battery information and/or the BLE signal strength information in the BLE signal transmitted first to the electronic device 310 and may transmit the BLE signal including the battery information and/or the BLE signal strength information.

When the electronic device 310 operates in the standby mode, the communicator 355 may transmit the BLE signal including the battery information and/or the BLE signal strength information to a peripheral device, in a state in which the BLE communication connection between the electronic device 310 and the communicator 355 is canceled. The peripheral device may include the electronic device 310.

According to an embodiment of the disclosure, even while the communicator 355 receives the charge signal from the electronic device 310, the communicator 355 may transmit the BLE signal including the battery information and/or the BLE signal strength information to the peripheral device.

The communicator 355 may receive a BLE signal that the electronic device 310 transmits to a peripheral device. That is, the communicator 355 may constantly, periodically, at random time intervals, or at every predetermined time point scan the BLE signal transmitted by the electronic device 310.

According to an embodiment of the disclosure, the communicator 355 may receive the charge signal from the electronic device 310. To this end, the communicator 355 may include an antenna for receiving the charge signal. The antenna included in the communicator 355 may be an antenna configured to receive a signal corresponding to a frequency range of the charge signal.

According to an embodiment of the disclosure, when the charge signal transmitted by the electronic device 310 to the mobile terminal 350 is a Wi-Fi signal having a frequency range of 2.4 GHz, the communicator 355 may receive the charge signal transmitted by the electronic device 310 using an antenna configured to receive a signal of the frequency range of 2.4 GHz, that is, the signal of the frequency range of 2.4 to 2.4835 GHz. The communicator 355 of the mobile terminal 350 may not perform the function of transmitting a Wi-Fi signal to the electronic device 310, etc. and may perform only the function of receiving a transmitted Wi-Fi signal.

According to an embodiment of the disclosure, the charger 357 may include various charging circuitry and perform charging by receiving the charge signal from the electronic device 310. According to an embodiment of the disclosure, the charger 357 may receive the charge signal from the electronic device 310 through the antenna and may convert the charge signal into electrical energy, thereby performing energy harvesting.

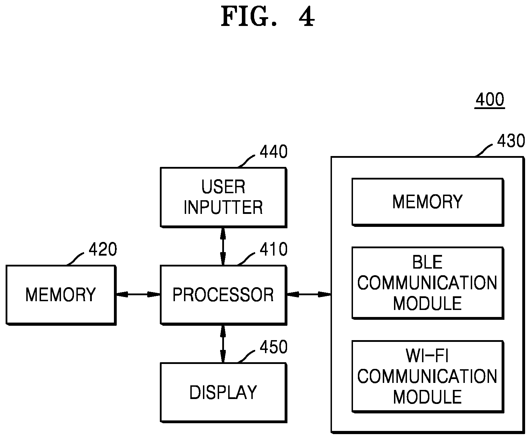

FIG. 4 is a block diagram illustrating an example configuration of an electronic device 400 according to various embodiments.

Referring to FIG. 4, the electronic device 400 may include a processor (e.g., including processing circuitry) 410, a memory 420, a communicator (e.g., including communicator circuitry) 430, a user inputter (e.g., including input circuitry) 440, and a display 450.

The electronic device 400 of FIG. 4 may be an example of the electronic device 310 of FIG. 3. Thus, the processor 410, the memory 420, and the communicator 430 included in the electronic device 400 of FIG. 4 may respectively perform the functions performed by the processor 311, the memory 313, and the communicator 315 included in the electronic device 310 of FIG. 3. Hereinafter, the same descriptions as described with reference to FIG. 3 may not be repeated.

Referring to FIG. 4, the processor 410 may be connected to the communicator 430. According to an embodiment of the disclosure, the processor 410 may be connected to the communicator 430 through a power detector pin. The power detector pin may include, for example, general purpose input output (GPIO). The processor 410 may include a circuit for controlling the GPIO. The GPIO may be a digital signal pin, operations of which, the operations including input and output operations, may be controlled according to control by the processor 410. The power detector pin may check a power level of a system on chip (SoC) of the electronic device 400 and notify the communicator 430 of the power level. The power detector pin may notify the communicator 430 of different signals according to power levels of the SoC so as to notify the communicator 430 of a mode of the electronic device 400.

When the electronic device 400 operates in a normal mode, the power detector pin may transmit, to the communicator 430, a signal notifying that the SoC of the electronic device 400 is turned on. For example, the power detector pin may notify the communicator 430 of a high power level of the SoC using a high signal.

When the electronic device 400 operates in a standby mode, the power detector pin may transmit, to the communicator 430, a signal notifying that the SoC of the electronic device 400 is turned off. For example, the power detector pin may use a low signal to notify the communicator 430 of a low power level of the SoC.

The power detector pin may periodically or whenever the power level of the SoC is changed notify the communicator 430 of a high signal or a low signal.

According to an embodiment of the disclosure, the communicator 430 may identify whether the electronic device 400 is in the normal mode or the standby mode by receiving the high signal or the low signal from the power detector pin.

According to an embodiment of the disclosure, the communicator 430 may include a BLE communication module (e.g., including communication circuitry), a Wi-Fi communication module (e.g., including communication circuitry), and a memory.

While the electronic device 400 operates in the normal mode, the communicator 430 may perform Wi-Fi communication using the Wi-Fi communication module. That is, when the electronic device 400 is in the normal mode, the communicator 430 may transmit and receive a Wi-Fi signal to and from a peripheral device by performing Wi-Fi communication. For example, the communicator 430 may receive a control signal from a peripheral electronic device, for example, a computer or a cellular phone, using a Wi-Fi router. The communicator 430 may output various contents by streaming or downloading the contents using the OTT service or the IPTV service through the Wi-Fi communication.

When the electronic device 400 operates in the standby mode, the communicator 430 may seldom use the Wi-Fi communication. For example, in the standby mode, the communicator 430 may not perform general-type Wi-Fi communication, except for receiving a control signal, such as power ON, from a cellular phone, etc.

The communicator 430 may perform BLE communication with the peripheral mobile terminal 350 using the BLE communication module. When the communicator 430 receives a signal notifying that the electronic device 400 is in the normal mode from the power detector pin, the communicator 430 may perform BLE communication with the mobile terminal 350 through the BLE communication module. The communicator 430 may be connected with the mobile terminal 350 and may transmit and receive a BLE signal to and from the mobile terminal 350.

When the communicator 430 receives a signal notifying that the electronic device 400 is in the standby mode from the power detector pin, the communicator 430 may cancel the BLE communication connection with the mobile terminal 350. Even when the connection between the communicator 430 and the mobile terminal 350 for BLE communication is canceled, the communicator 430 may continually receive the BLE signal from the mobile terminal 350.

According to an embodiment of the disclosure, when the communicator 430 receives the signal notifying that the electronic device 400 is in the standby mode from the power detector pin, the communicator 430 may determine whether or not to charge the mobile terminal 350 and, when the communicator 430 determines to charge the mobile terminal 350, may transmit a charge signal to the mobile terminal 350.

According to an embodiment of the disclosure, when the electronic device 400 is in the standby mode, the communicator 430 may transmit a Wi-Fi signal to the mobile terminal 350 using the Wi-Fi communication module. As described above, the electronic device 400 may seldom perform the Wi-Fi communication in the standby mode. According to an embodiment of the disclosure, while the electronic device 400 operates in the standby mode, the communicator 430 may charge the mobile terminal 350 by transmitting the Wi-Fi signal using the Wi-Fi communication module.

According to an embodiment of the disclosure, the communicator 430 may include a memory. When the memory included in the communicator 430 is referred to as an internal memory, the internal memory may store BLE identification information obtained from a BLE signal. The internal memory may store data required by the communicator 430 to perform wireless communication with an external electronic device, for example, the mobile terminal 350. For example, when the electronic device 400 is connected to the mobile terminal 350 through a Bluetooth communication network, the electronic device 400 may receive a BLE address of the mobile terminal 350, etc. to perform pairing or connection with the mobile terminal 350. The internal memory may store the BLE address received from the mobile terminal 350.

When the communicator 430 receives the BLE signal from the mobile terminal 350, the communicator 430 may obtain battery information and/or BLE signal strength information from the BLE signal and may store the battery information and/or the BLE signal strength information in the internal memory.

According to an embodiment of the disclosure, when the electronic device 400 operates in the normal mode, the processor 410 or the communicator 430 may obtain the battery information and/or the BLE signal strength information from the BLE signal. The electronic device 400 may store the battery information and/or the BLE signal strength information obtained from the BLE signal in the memory 420 or the internal memory of the communicator 430.

When the operation mode of the electronic device 400 is switched from the normal mode to the standby mode in a state in which the battery information and/or the BLE signal strength information are/is stored in the memory 420, the processor 410 may transmit the battery information and/or the BLE signal strength information stored in the memory 420 to the communicator 430 before the electronic device 400 enters into the standby mode. In this case, the communicator 430 may store the battery information and/or the BLE signal strength information in the internal memory in the communicator 430. Thereafter, when the electronic device 400 is switched into the standby mode, the communicator 430 may determine whether or not to transmit a charge signal, using the information stored in the internal memory.

When the electronic device 400 operates in the standby mode, the communicator 430, rather than the processor 410, may obtain the battery information and/or the BLE signal strength information from the BLE signal and store the battery information and/or the BLE signal strength information in the internal memory of the communicator 430. The electronic device 400 may determine whether or not to transmit the charge signal using the information stored in the internal memory.

The display 450 may display contents provided by content providers on a screen. The display 450 may output contents received by the communicator 430 through Wi-Fi communication, etc. The display 450 may output, to the screen, a program received in real time or contents streamed or downloaded from a server (not shown) or may output, to the screen, contents stored in a storage medium by reading the contents.

When the display 450 is implemented as a touch screen, the display 450 may be used as both an outputter and an inputter including a user interface. For example, the display 450 may include at least one of a liquid crystal display, a thin-film transistor-liquid crystal display, an organic light-emitting diode, a flexible display, a three-dimensional (3D) display, or an electrophoretic display. Also, according to an implementation form of the display 450, there may be two or more displays 450.

According to an embodiment of the disclosure, the display 450 may output a user interface screen for receiving an input of selection with respect to whether or not to perform automatic charging of the mobile terminal.

The user inputter 440 may include various input circuitry and receive a user input for controlling the electronic device 400. The user inputter 440 may include, but is not limited to, various types of user inputters including a touch panel configured to sense a user's touch, a button configured to receive user's push manipulation, a wheel configured to receive user's rotation manipulation, a keyboard, a dome switch, a microphone configured to recognize a sound, a motion sensor configured to sense a motion, and the like.

With respect to the user interface screen for receiving the input of selection as to whether or not to perform automatic charging of the mobile device, which is displayed on the display 450, a user may activate or non-activate the function of automatic charging of the mobile terminal using the user inputter 440.

When the mobile terminal 350 is a remote controller configured to manipulate the electronic device 400, the user inputter 440 may receive a control signal from the mobile terminal 350. The mobile terminal 350 may control the electronic device 400 using infrared or BLE communication. The mobile terminal 350 may control the function of the electronic device 400 through the user inputter 440 using at least one of a key, a button, a touch pad, a microphone (not shown) capable of receiving a voice of a user, or a sensor (not shown) capable of recognizing a motion of a controller, included in the user inputter 440.

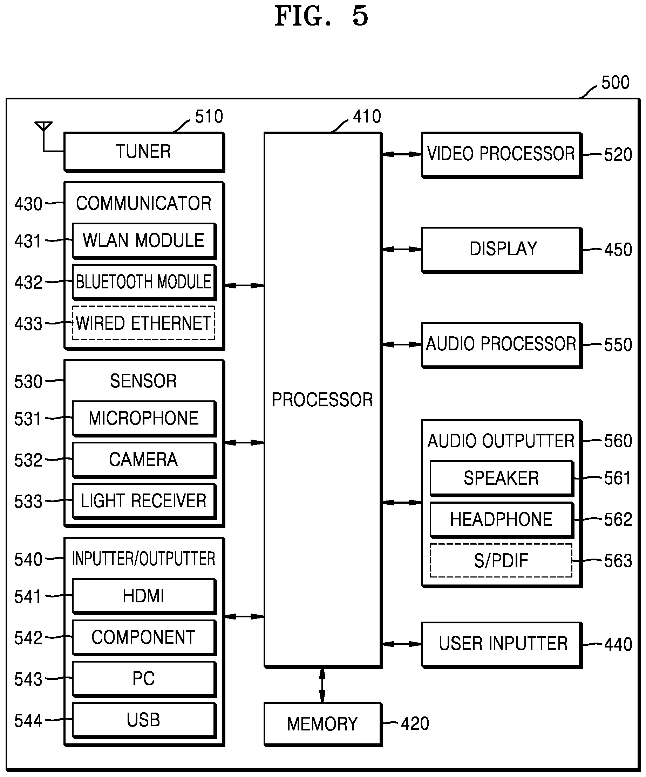

FIG. 5 is a block diagram illustrating an example configuration of an electronic device 500 according to various embodiments.

The electronic device 500 of FIG. 5 may include the components of the electronic device 400 of FIG. 4. Components included in the electronic device 500 of FIG. 5 that are the same as or similar to the components included in the electronic device 400 of FIG. 4 are referred to using the same reference numerals. Hereinafter, the same descriptions as described with reference to FIG. 4 may not be repeated.

Referring to FIG. 5, in addition to the processor 410, the memory 420, the communicator 430, the user inputter 440, and the display 450, the electronic device 500 may further include a tuner 510, a video processor (e.g., including video processing circuitry) 520, a sensor 530, an inputter/outputter (e.g., including input/output circuitry) 540, an audio processor (e.g., including audio processing circuitry) 550, and an audio outputter (e.g., including audio output circuitry) 560.

The tuner 510 may tune and select only a frequency of a channel to be received by the electronic device 500 from among many electro-wave components, through amplification, mixing, resonance, etc. with respect to the broadcasting content, etc. received in a wired or wireless manner. The content received through the tuner 510 may be decoded and may be divided into audio, video, and/or additional data. The divided audio, video, and/or additional data may be stored in the memory 420 according to control by the processor 410.

The communicator 430 may include various communication circuitry and connect the electronic device 500 with a peripheral device, an external device, a server, the mobile terminal 350, etc. according to control by the processor 410. The communicator 430 may include at least one communication module including various communication circuitry capable of performing wireless communication. The communicator 430 may include at least one of a WLAN module 431, a Bluetooth module 432, or wired Ethernet 433, according to the performance and structure of the electronic device 500.

The Bluetooth module 432 may receive a Bluetooth signal transmitted from the mobile terminal 350 according to the Bluetooth communication standards. The Bluetooth module 432 may correspond to a BLE communication module and may receive a BLE signal. The Bluetooth module 432 may constantly or temporarily scan the BLE signal to detect the reception of the BLE signal.

The WLAN module 431 may transmit and receive a Wi-Fi signal to and from a peripheral device according to the Wi-Fi communication standards. Also, the wireless LAN module 431 may transmit a Wi-Fi signal to the mobile terminal 350 in order to charge the mobile terminal 350.

In addition to the Bluetooth module 432 and the WLAN module 431, the communicator 430 may further include one or more wireless communication modules capable of transmitting and receiving different types of wireless signals.

The sensor 530 may include various sensors and sense a voice of a user, an image of the user, or an interaction of the user and may include a microphone 531, a camera 532, and a light receiver 533. The microphone 531 may receive an uttered voice of the user and may convert the received voice into an electrical signal to output the electrical signal through the processor 410. The camera 532 may include a sensor (not shown) and a lens (not shown) and may capture an image formed on a screen. The light receiver 533 may receive a light signal (including a control signal).

The light receiver 533 may receive, from a controller, such as a remote controller or a cellular phone, a light signal corresponding to a user input (for example, a touch input, a press input, a touch gesture, a voice, or a motion). According to an embodiment of the disclosure, the controller may include the mobile terminal 350, but is not limited thereto. The received light signal may include a key code instruction corresponding to a key input of the mobile terminal 350. The processor 410 may extract the key code instruction from the light signal received by the light receiver 533 and may control the electronic device 500 to operate in response to the key code instruction.

The inputter/outputter 540 may include various input/output circuitry and receive video (for example, a video signal, a still image signal, etc.), audio (for example, a voice signal, a music signal, etc.), and additional information such as metadata from an external device, etc. of the electronic device 500 according to control by the processor 410. The metadata may include high dynamic range (HDR) information about content, descriptions about content or a title of the content, a content storage location, etc. The inputter/outputter 540 may include one of a high-definition multimedia interface (HDMI) port 541, a component jack 542, a PC port 543, or a USB port 544. The inputter/outputter 540 may include a combination of the HDMI port 541, the component jack 542, the PC port 543, and the USB port 544.

The video processor 520 may include various video processing circuitry and process image data to be displayed on the display 450 and may perform various image processing operations, such as decoding, rendering, scaling, noise removal, frame rate conversion, resolution conversion, etc., on the image data.

The display 450 may output on a screen content received from a broadcasting station, an external server, or an external storage medium. The content may be a media signal and may include a video signal, an image, a text signal, etc.

The audio processor 550 may include various audio processing circuitry and process audio data. The audio processor 550 may perform various processing operations, such as decoding, amplification, noise removal, etc., on the audio data.

The audio outputter 560 may include various audio output circuitry and output audio included in content received through the tuner 510, audio that is input through the communicator 430 or the inputter/outputter 540, and audio stored in the memory 420, according to control by the processor 410. The audio outputter 560 may include at least one of a speaker 561, a headphone 562, or a Sony/Philips digital interface (S/PDIF) output terminal 563.

The user inputter 440 may include various input circuitry and receive a user input for controlling the electronic device 500. The user inputter 440 may include, but is not limited to, various types of user inputters including a touch panel configured to sense a user's touch, a button configured to receive user's push manipulation, a wheel configured to receive user's rotation manipulation, a keyboard, a dome switch, a microphone configured to recognize a sound, a motion sensor configured to sense a motion, and the like. When the mobile terminal 350 controls the electronic device 500, the user inputter 440 may receive a control signal received from the mobile terminal 350.

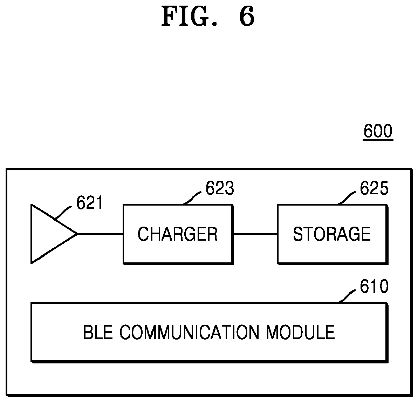

FIG. 6 is a block diagram illustrating an example configuration of a mobile terminal 600 according to various embodiments.

The mobile terminal 600 of FIG. 6 may be an example of the mobile terminal 350 of FIG. 3. ABLE communication module (e.g., including BLE communication circuitry) 610 and an antenna 621 illustrated in FIG. 6 may be included in the communicator 355 included in the mobile terminal 350 of FIG. 3. A charger (e.g., including charging circuitry) 623 of FIG. 6 may correspond to the charger 357 of FIG. 3. Although not illustrated in FIG. 6, the mobile terminal 600 may further include the processor 351 and the memory 353, like the mobile terminal 350 of FIG. 3.

Referring to FIG. 6, the mobile terminal 600 may include the BLE communication module 610. The BLE communication module 610 may include various communication circuitry and transmit or receive a BLE signal according to the BLE communication standards. The BLE communication module 610 may scan a BLE signal received from the electronic device 310 or transmit the BLE signal to the electronic device 310.

The BLE communication module 610 may continually transmit the BLE signal to a peripheral device, even when a BLE communication connection with the electronic device 310 is canceled.

According to an embodiment of the disclosure, the mobile terminal 600 may include the antenna 621 for receiving a charge signal. According to an embodiment of the disclosure, the antenna 621 may be a reception-exclusive antenna performing the function of receiving a wireless signal. The antenna 621 may be an antenna capable of receiving a signal of a frequency range of the charge signal transmitted by the electronic device 310. The antenna 621 may receive a Wi-Fi signal having an output level that is greater than or equal to a specified value, as the charge signal. When the antenna 621 receives the charge signal, the antenna 621 may transmit the charge signal to the charger 623.

The charger 623 may include various charging circuitry and convert the charge signal received from the antenna 621 into electrical energy. The charger 623 may store the converted electrical energy in a storage 625.

The storage 625 may store electrical energy transmitted from the charger 623. The storage 625 may include, for example, at least one of a secondary battery or a super capacitor. The storage 625 may store the electrical energy and provide the electrical energy required for the mobile terminal 600 to operate.

Although not illustrated in FIG. 6, when the mobile terminal 600 is a type that is charged using a USB, the mobile terminal 600 may further include a USB connector. The mobile terminal 600 may receive power through the USB connector and store the received power in the storage 625.

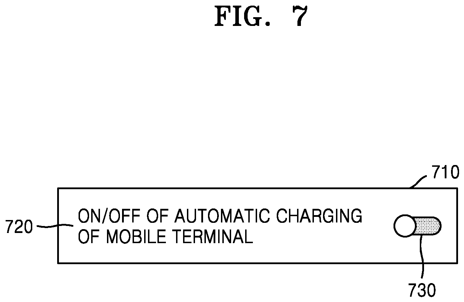

FIG. 7 is a diagram illustrating an example user interface screen through which an electronic device receives an input with respect to whether or not to automatically charge a mobile terminal, according to various embodiments.

Referring to FIG. 7, according to an embodiment of the disclosure, the electronic device 310 may receive an input of selection with respect to whether or not to automatically charge the mobile terminal 350 in the vicinity of the electronic device 310 in a standby mode. To this end, the electronic device 310 may display a user interface screen 710 as a window form on a region of the display. A size, an output location, the transparency, and/or a shape of the user interface screen 710 may be variously modified.

Auser may select whether or not to automatically charge the mobile terminal 350 using the user interface screen 710. The user may identify that an item to be selected by the user on the currently output user interface screen 710 is on/off states of automatic charging of a mobile terminal, using text information 720 included in the user interface screen 710.

The user may select a function of automatic charging of the mobile terminal 350 by manipulating a slide key 730, etc. For example, the user may move the slide key 730 to the left side and configure the electronic device 310 to automatically charge the mobile terminal 350 when the electronic device 310 is in the standby mode.

When the function of automatic charging of the mobile terminal is activated according to selection of a user or as default, the electronic device 310 may automatically charge the mobile terminal 350 in the standby mode. To this end, the electronic device 310 may first determine whether or not to charge the mobile terminal 350, when the electronic device 310 is in the standby mode. For example, when the remaining battery of the mobile terminal 350 is less than a specified amount, and the mobile terminal 350 is determined to be within a proximate region, the electronic device 310 may determine to charge the mobile terminal 350. When the electronic device 310 determines to charge the mobile terminal 350, the electronic device 310 may transmit a charge signal to the mobile terminal 350.

The user may non-activate the function of automatic charging of the mobile terminal 350 by moving the slide key 730 to the right side. When the function of automatic charging of the mobile terminal 350 is non-activated according to selection of a user or as default, the electronic device 310 may not consider whether or not to charge the mobile terminal 350 even after the electronic device 310 enters into the standby mode.

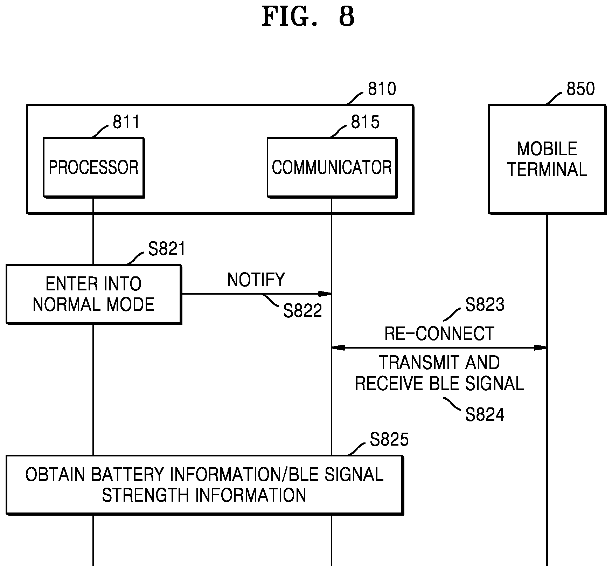

FIG. 8 is a signal flow diagram illustrating an example operation of an electronic device 810, according to various embodiments.

The electronic device 810 and a mobile terminal 850 of FIG. 8 may be examples of the electronic device 310 and the mobile terminal 350 of FIG. 3, respectively.

Referring to FIG. 8, the electronic device 810 may include a processor (e.g., including processing circuitry) 811 and a communicator (e.g., including communication circuitry) 815.

The electronic device 810 may perform BLE communication with the mobile terminal 850 through a BLE communication network.

The electronic device 810 may perform pairing with the mobile terminal 850 for the BLE communication. When the electronic device 810 and the mobile terminal 850 perform the pairing with each other, the electronic device 810 and the mobile terminal 850 may receive and store identification information and a security key of each other.

According to an embodiment of the disclosure, when the electronic device 810 operates in a standby mode, the electronic device 810 may disconnect BLE communication with the mobile terminal 850. When the electronic device 810 operates in the standby mode, there is a low possibility that the electronic device 810 receive a control signal from the mobile terminal 850, etc. For example, when the electronic device 810 is in the standby mode, the electronic device 810 may not receive other control signals than a control signal to be turned on from the mobile terminal 850, or the like, and thus, in order to prevent and/or reduce unnecessary power consumption, the electronic device 810 may disconnect the BLE communication with the mobile terminal 850.

According to an embodiment of the disclosure, in operation S821, the electronic device 810 may operate in the standby mode and then enter into a normal mode. For example, the electronic device 810 may operate in the standby mode, and when the electronic device 810 receives the control signal to be turned on from the mobile terminal 850, etc., the electronic device 810 may be switched into the normal mode. According to occurrence of a predetermined event, for example, when it is configured that the electronic device 810 is automatically turned on at a predetermined time, the electronic device 810 may be automatically switched from the standby mode to the normal mode at the predetermined time.

In operation S822, when the electronic device 810 enters into the normal mode, the processor 811 or a power detector pin connecting between the processor 811 and the communicator 815 may notify the communicator 815 of the fact that the electronic device 810 enters into the normal mode.

When the communicator 815 receives the notification that the electronic device 810 enters into the normal mode, the communicator 815 may request a connection from the mobile terminal 850 to be re-connected with the mobile terminal 850. In operation S823, when the mobile terminal 850 accepts the connection request from the communicator 815, the communicator 815 may be re-connected with the mobile terminal 850. In operation S823, the mobile terminal 850 may request a connection from the communicator 815, and the communicator 815 may accept the connection request so that the communicator 815 and the mobile terminal 850 may be connected to each other.

According to an embodiment of the disclosure, the communicator 815 may obtain identification information of the mobile terminal 350 from a BLE signal received from the mobile terminal 850 and may use the identification information of the mobile terminal 350 to identify whether or not the mobile terminal 850 is registered. When the mobile terminal 850 is the registered device, the communicator 815 may be connected with the mobile terminal 850.

According to an embodiment of the disclosure, in operation S824, when the communicator 815 is re-connected to the mobile terminal 850, or after the communicator 815 is re-connected to the mobile terminal 850, the communicator 815 may transmit and receive a BLE signal to and from the mobile terminal 850.

According to an embodiment of the disclosure, when the mobile terminal 850 transmits, to the communicator 815, a BLE signal for a re-connection with the electronic device 810, the mobile terminal 850 may transmit the BLE signal by including battery information and/or BLE signal strength information of the mobile terminal 850 in the BLE signal.

According to an embodiment of the disclosure, the mobile terminal 850 may include the battery information and/or the BLE signal strength information of the mobile terminal 850 in a BLE signal that the mobile terminal 815 first transmits to the communicator 815 after the mobile terminal 850 and the communicator 815 are re-connected with each other.

For example, after the mobile terminal 850 is connected to the electronic device 810, a user may input a predetermined key, for example, a volume adjustment key. The mobile terminal 850 may generate a control signal corresponding to the predetermined key that is input by the user. The control signal may be a BLE signal. The mobile terminal 850 may transmit the BLE signal to the communicator 815. When the control signal corresponding to the predetermined key, transmitted by the mobile terminal 850 to the electronic device 810, is the BLE signal transmitted first to the electronic device 810 after the mobile terminal 850 and the electronic device 810 are connected to each other, the mobile terminal 850 may transmit the control signal by including the battery information and/or the BLE signal strength information in the control signal.

For example, because the mobile terminal 850 has to transmit the BLE signal for connection with the electronic device 810, the mobile terminal 850 may transmit the BLE signal for connection with the electronic device 810 by including the battery information and/or the BLE signal strength information in the BLE signal. Also, because the mobile terminal 850 has to transmit the BLE signal to the electronic device 810 based on the input of the predetermined key of the user after the electronic device 810 and the mobile terminal 850 are connected to each other, the mobile terminal 850 may transmit the BLE signal to the electronic device 810 by including the battery information and/or the BLE signal strength information in the BLE signal. As described above, the mobile terminal 850 may transmit the BLE signal for connection with the electronic device 810 by including the battery information and/or the BLE signal strength information in the BLE signal for connection with the electronic device 810, or the mobile terminal 850 may transmit the BLE signal first transmitted and received after the mobile terminal 850 is connected to the electronic device 810 by including the battery information and/or the BLE signal strength information only in the BLE signal first transmitted and received after the mobile terminal 850 is connected to the electronic device 810. Thus, battery of the mobile terminal 850 may be saved as much as possible.

According to an embodiment of the disclosure, when the mobile terminal 850 transmits the BLE signal for connection with the communicator 815 without including the battery information and/or the BLE signal strength information in the BLE signal, or when the mobile terminal 850 does not include the battery information and/or the BLE signal strength information in the BLE signal first transmitted to the communicator 815 after the mobile terminal 850 is re-connected to the communicator 815, the communicator 815 may request a transmission of the battery information and/or the BLE signal strength information from the mobile terminal 850.

According to an embodiment of the disclosure, in operation S825, the processor 811 and/or the communicator 815 may obtain the battery information and/or the BLE signal strength information from the BLE signal received from the mobile terminal 850. The processor 811 may store the battery information and/or the BLE signal strength information in a memory of the electronic device 810 or an internal memory of the communicator 815.

Thereafter, when the electronic device 810 enters into the standby mode, the communicator 815 may determine whether or not to charge the mobile terminal 850 using the battery information and/or the BLE signal strength information stored in the memory.

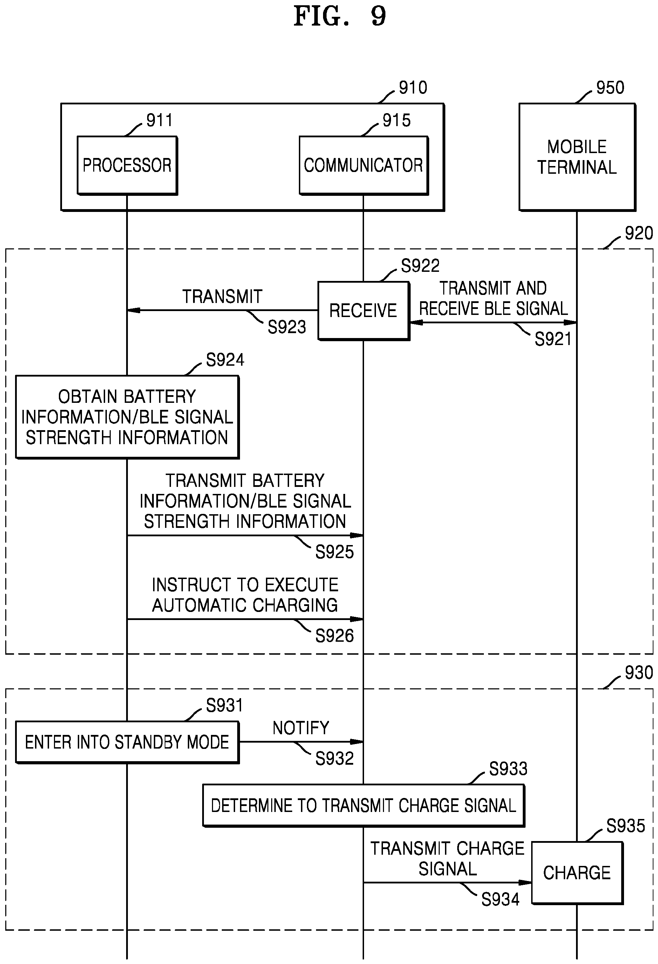

FIG. 9 is a signal flow diagram illustrating an example operation of an electronic device 910, according to various embodiments.

The electronic device 910 and a mobile terminal 950 of FIG. 9 may be examples of the electronic device 310 and the mobile terminal 350 of FIG. 3, respectively.

Referring to FIG. 9, the electronic device 910 may include a processor (e.g., including processing circuitry) 911 and a communicator (e.g., including communication circuitry) 915.

In FIG. 9, block 920 indicates an operation of the electronic device 910 in a normal mode. Also, block 930 indicates an operation of the electronic device 910 in a standby mode.

First, block 920 is described.

In operation S921, when the electronic device 910 is in the normal mode, the electronic device 910 may perform BLE communication with the mobile terminal 950 and may transmit and receive a BLE signal to and from the mobile terminal 950. In operation S923, the communicator 915 of the electronic device 910 may receive the BLE signal from the mobile terminal 950 (S922) and may transmit the BLE signal to the processor 911.

According to an embodiment of the disclosure, the processor 911 may obtain battery information and/or BLE signal strength information from the BLE signal received from the communicator 915 (S924). FIG. 9 illustrates a case in which an object obtaining the battery information and/or the BLE signal strength information from the BLE signal is the processor 911.

According to an embodiment of the disclosure, the BLE signal from which the processor 911 obtains the battery information and/or the BLE signal strength information may be a BLE signal to re-connect the mobile terminal 950 and the communicator 915 with each other. The BLE signal from which the processor 911 obtains the battery information and/or the BLE signal strength information may be a BLE signal that the mobile terminal 950 transmits first to the communicator 915 after the mobile terminal 950 and the communicator 915 are re-connected with each other.

The processor 911 may store the obtained battery information and/or BLE signal strength information in a memory of the electronic device 910.

Thereafter, the processor 911 may receive a control signal instructing a switch of the electronic device 910 into the standby mode. For example, the processor 911 may receive the control signal instructing to turn off power, from a controller, such as the mobile terminal 950, etc. According to occurrence of a predetermined event, for example, when the electronic device 910 is configured to be automatically turned off at a predetermined time, the electronic device 910 may be automatically switched from the normal mode to the standby mode at the predetermined time.

According to an embodiment of the disclosure, in operation S925, before the processor 911 enters into the standby mode, the processor 911 may transmit the battery information and/or the BLE signal strength information stored in the memory to the communicator 915. According to an embodiment of the disclosure, in operation S926, when the automatic charging of the mobile terminal is activated according to selection of a user or as default, the processor 911 may instruct the communicator 915 to execute the automatic charging. In operation S931, after the processor 911 controls components in the electronic device 910, the electronic device 910 may enter into the standby mode.

Hereinafter, block 930 is described.

In operation S932, when the electronic device 910 enters into the standby mode, the processor 911 or a power detector pin connecting between the processor 911 and the communicator 915 may notify the communicator 915 of the fact that the electronic device 910 enters into the standby mode.

When the communicator 915 receives the notification that the electronic device 910 enters into the standby mode, the communicator 915 may determine whether or not to charge the mobile terminal 950. When the communicator 915 receives the instruction to execute the automatic charging from the processor 911, the communicator 915 may determine whether or not to charge the mobile terminal 950. The communicator 915 may identify a remaining battery capacity of the mobile terminal 950 and whether or not the mobile terminal 950 is within a proximate region using the battery information and/or the BLE signal strength information received from the processor 911. In operation S934, when the communicator 915 determines to transmits a charge signal based on the battery information and/or the BLE signal strength information (S933), the communicator 915 may transmit the charge signal to the mobile terminal 950.

In operation S935, the mobile terminal 950 may receive the charge signal from the communicator 915 and may convert the charge signal into electrical energy and may perform charging.

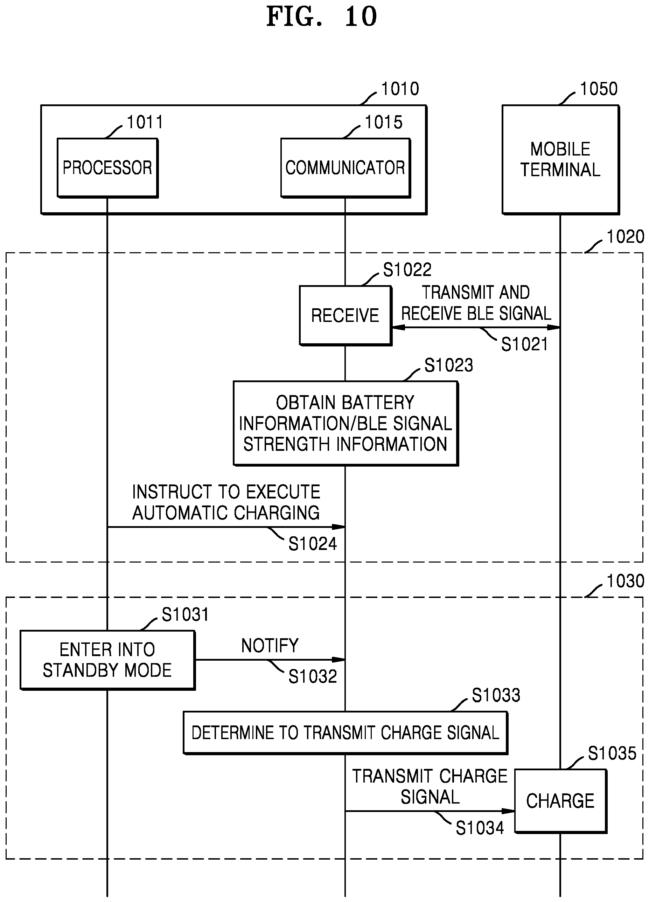

FIG. 10 is a signal flow diagram illustrating an example operation of an electronic device 1010, according to various embodiments.

The electronic device 1010 and a mobile terminal 1050 of FIG. 10 may examples of the electronic device 310 and the mobile terminal 350 of FIG. 3, respectively.

Referring to FIG. 10, the electronic device 1010 may include a processor (e.g., including processing circuitry) 1011 and a communicator (e.g., including communication circuitry) 1015.

In FIG. 10, block 1020 indicates an operation of the electronic device 1010 in a normal mode, and block 1030 indicates an operation of the electronic device 1010 in a standby mode.

Referring to block 1020, in operation S1021, when the electronic device 1010 operates in the normal mode, the electronic device 1010 may perform BLE communication with the mobile terminal 1050 and transmit and receive a BLE signal to and from the mobile terminal 1050. In operation S1023, the communicator 1015 may receive the BLE signal from the mobile terminal 1050 (S1022) and may obtain battery information and/or BLE signal strength information from the BLE signal.

For example, FIG. 10 illustrates a case in which an object obtaining the battery information and/or the BLE signal strength information from the BLE signal is the communicator 1015, and thus, FIG. 10 is different from FIG. 9 illustrating the case in which the object obtaining the battery information and/or the BLE signal strength information from the BLE signal is the processor 911.

According to an embodiment of the disclosure, the BLE signal from which the communicator 1015 obtains the battery information and/or the BLE signal strength information may be a BLE signal for re-connection between the mobile terminal 1050 and the communicator 1015 or a BLE signal that the mobile terminal 1050 first transmits to the communicator 1015 after the mobile terminal 1050 and the communicator 1015 are re-connected with each other.

The communicator 1015 may store the obtained battery information and/or BLE signal strength information in a memory of the communicator 1015.

Thereafter, the electronic device 1010 may receive a control signal instructing a switch into the standby mode. In operation S 1024, when the electronic device 1010 is configured to automatically charge the mobile terminal 1050, the processor 1011 may instruct the communicator 1015 to perform automatic charging, before the electronic device 1010 enters into the standby mode.

Thereafter, as illustrated in block 930, the processor 1011 may enter into the standby mode in operation S1031. In operation S1032, the processor 1011 or a power detector pin may notify the communicator 1015 of the fact that the electronic device 1010 enters into the standby mode.

When the communicator 1015 receives the notification that the electronic device 1010 enters into the standby mode, the communicator 1015 may determine whether or not to charge the mobile terminal 1050 in response to the instruction of the processor 1011 to execute the automatic charging. The communicator 1015 may read, from an internal memory, the battery information and/or the BLE signal strength information obtained by receiving the BLE signal from the mobile terminal 1050 when the electronic device 1010 operates in the normal mode, and may use the battery information and/or the BLE signal strength information to determine whether or not to transmit a charge signal. In operation S 1034, when the communicator 1015 determines to transmit the charge signal to the mobile terminal 1050 (S1033), the communicator 1015 may transmit the charge signal to the mobile terminal 1050.

In operation S1035, the mobile terminal 1050 may receive the charge signal from the communicator 1015 and may convert the charge signal into electrical energy and may perform charging.

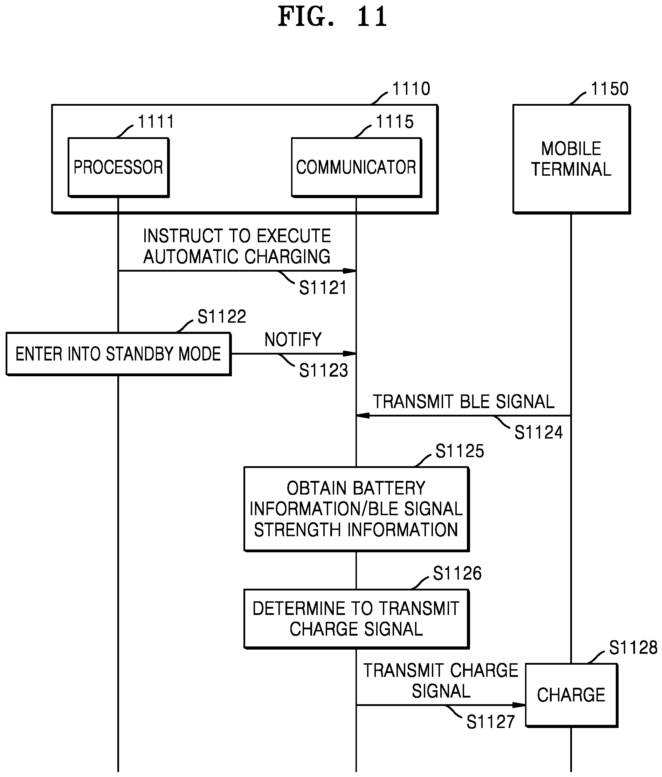

FIG. 11 is a signal flow diagram illustrating an example operation of an electronic device 1110, according to various embodiments.

The electronic device 1110 and a mobile terminal 1150 of FIG. 11 may be examples of the electronic device 310 and the mobile terminal 350 of FIG. 3, respectively.

Referring to FIG. 11, the electronic device 1110 may include a processor (e.g., including processing circuitry) 1111 and a communicator (e.g., including communication circuitry) 1115.

Referring to FIG. 11, the electronic device 1110 may operate in a normal mode and then may be switched into a standby mode.

In operation S1121, when a function of automatically charging a mobile terminal is activated in the electronic device 1110, the processor 1111 may instruct the communicator 1115 to execute automatic charging, before the electronic device 1110 enters into the standby mode.

The electronic device 1110 may enter into the standby mode, in operation S1122. In operation S1123, the processor 1111 or a power detector pin may notify the communicator 1115 of the fact that the electronic device 1110 enters into the standby mode.

When the communicator 1115 receives the notification that the electronic device 1110 enters into the standby mode, the communicator 1115 may disconnect the BLE communication with the mobile terminal 1150. In operation S1124, even when the BLE communication is disconnected between the communicator 1115 and the mobile terminal 1150, the mobile terminal 1150 may continually transmit a BLE signal to a peripheral device.

In response to the instruction from the processor 1111 to execute the automatic charging, the communicator 1115 may determine whether or not to charge the mobile terminal 1150, when the electronic device 1110 is in the standby mode.

According to an embodiment of the disclosure, in operation S1125, when the electronic device 1110 operates in the standby mode, the communicator 1115 may obtain battery information and/or BLE signal strength information from the BLE signal received from the mobile terminal 1150. For example, FIG. 11 illustrates a case in which the electronic device 1110 may not use a BLE signal received from the mobile terminal 1150 when the electronic device 1110 operates in the normal mode and may obtain the battery information and/or the BLE signal strength information from the BLE signal received from the mobile terminal 1150 after the electronic device 1110 enters into the standby mode. In this aspect, FIG. 11 is different from FIGS. 9 and 10. Battery information and/or BLE signal strength information of the BLE signal received in the normal mode may be different from the battery information and/or the BLE signal strength information of the BLE signal received after the electronic device 1110 enters into the standby mode. For example, there is a difference between a time point at which the BLE signal is received in the normal mode and a time point at which the BLE signal is received when the electronic device 1110 enters into the standby mode, and thus, values of the battery information and/or the BLE signal strength information may be different. Thus, the communicator 1115 may determine whether or not to transmit a charge signal to the mobile terminal 1150 using the battery information and/or the BLE signal strength information of the BLE signal received when the electronic device 1110 enters into the standby mode.

According to an embodiment of the disclosure, the communicator 1115 may determine whether or not to transmit the charge signal using the battery information and/or the BLE signal strength information obtained from the BLE signal. When the communicator 1115 determines to transmit the charge signal to the mobile terminal 1150 in operation S1126, the communicator 1115 may transmit the charge signal to the mobile terminal 1150 in operation S 1127.

In operation S1128, when the mobile terminal 1150 receives the charge signal from the communicator 1115, the mobile terminal 1150 may convert the charge signal into electrical energy and may perform charging.

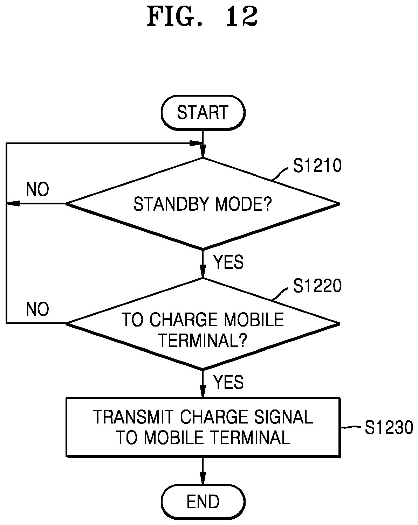

FIG. 12 is a flowchart illustrating an example process in which the electronic device 310 transmits a charge signal, according to various embodiments.

Referring to FIG. 12, the electronic device 310 may determine whether or not a current operation mode is a standby mode, in operation S1210. In operation S1220, when the current operation mode is the standby mode, the electronic device 310 may determine whether or not to charge the mobile terminal 350.

The electronic device 310 may determine whether or not to charge the mobile terminal 350 using a BLE signal received from the mobile terminal 350.

According to an embodiment of the disclosure, the electronic device 310 may determine whether or not to charge the mobile terminal 350 using a first BLE signal received from the mobile terminal 350 when the electronic device 310 operates in a normal mode before the electronic device 310 is switched into the standby mode. The first BLE signal may be a BLE signal that the electronic device 310 receives, during the normal mode, from the mobile terminal 350 to be connected with the mobile terminal 350 through a BLE communication network or may be a BLE signal that the electronic device 310 first receives from the mobile terminal 350 after the electronic device 310 is connected with the mobile terminal 350.

According to an embodiment, the electronic device 310 may determine whether or not to charge the mobile terminal 350 using a second BLE signal that the electronic device 310 receives from the mobile terminal 350 when the electronic device 310 operates in the standby mode.

The electronic device 310 may obtain at least one of battery information or BLE signal strength information from the BLE signal and may use the at least one of the battery information or the BLE signal strength information to determine whether or not to charge the mobile terminal 350.

In operation S1230, when the electronic device 310 determines to charge the mobile terminal 350, the electronic device 310 may transmit a charge signal to the mobile terminal 350. For example, the electronic device 310 may transmit a Wi-Fi signal having an output level that is greater than or equal to a specified value to the mobile terminal 350.

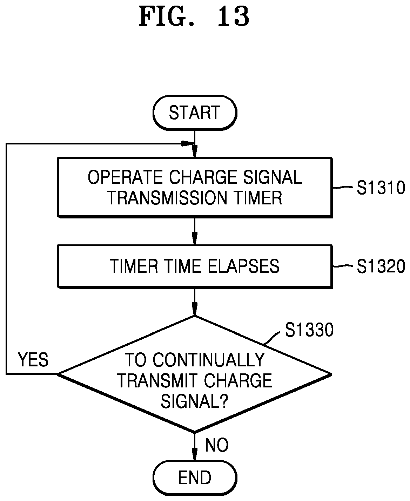

FIG. 13 is a flowchart illustrating an example process in which the electronic device 310 operates using a timer, according to various embodiments.

Referring to FIG. 13, the electronic device 310 may operate a charge signal transmission timer, in operation S 1310. For example, when the electronic device 310 transmits a charge signal to the mobile terminal 350, the electronic device 310 may simultaneously operate the charge signal transmission timer.

According to an embodiment of the disclosure, the electronic device 310 may obtain battery information and/or BLE signal strength information using a BLE signal obtained while the electronic device 310 operates in a normal mode and may determine whether or not to transmit the charge signal to the mobile terminal 350 based on the obtained battery information and/or BLE signal strength information.

During a time that is set by the timer, the electronic device 310 may transmit a Wi-Fi signal having an output level that is greater than or equal to a specified value to the mobile terminal 350.

When the time that is set by the timer is overdue in operation S 1320, the electronic device 310 may determine whether or not to continually transmit the charge signal to the mobile terminal 350 in operation S1330.

After the time that is set by the timer is overdue, the electronic device 310 may receive a new BLE signal from the mobile terminal 350 and may obtain at least one of battery information or BLE signal strength information based on the new BLE signal. For example, after the time that is set by the timer is overdue, for example, when the electronic device 310 operates in the standby mode, the electronic device 310 may receive the new BLE signal from the mobile terminal 350 and may obtain the battery information and/or the BLE signal strength information from the new BLE signal to determine whether or not to transmit the charge signal to the mobile terminal 350.

When the mobile terminal 350 has a remaining battery capacity that is still less than a specified value and a BLE signal strength that is greater than a specified strength, the electronic device 310 may determine to continually charge the mobile terminal 350.

When the remaining battery capacity of the mobile terminal 350 becomes greater than or equal to the specified value, or the BLE signal strength of the mobile terminal 350 has decreased to be less than the specified strength so that the mobile terminal 350 is not determined to be in a proximate region, the electronic device 310 may determine not to transmit the charge signal to the mobile terminal 350.

When the electronic device 310 determines to continually charge the mobile terminal 350, the electronic device 310 may continually transmit a Wi-Fi signal having an output level that is greater than or equal to a specified value to the mobile terminal 350 and may simultaneously re-operate the charge signal transmission timer.

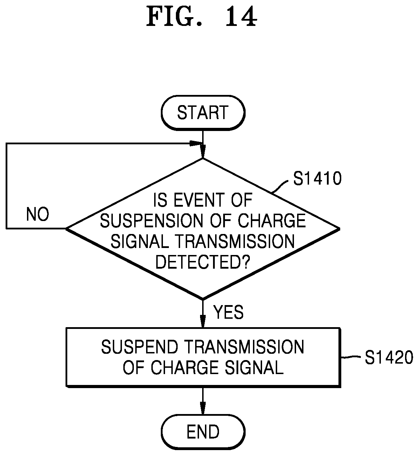

FIG. 14 is a flowchart illustrating an example process in which the electronic device 310 suspends transmission of a charge signal, according to various embodiments.

Referring to FIG. 14, in operation S1410, while the electronic device 310 transmits the charge signal, the electronic device 310 may detect an event of suspension of the charge signal transmission.

For example, when the electronic device 310 performs Wi-Fi communication, the electronic device 310 may detect the performance of the Wi-Fi communication as the event of the suspension of the charge signal transmission. When the electronic device 310 performs communication by transmitting and receiving data defined in the Wi-Fi standards to and from a peripheral device according to a Wi-Fi communication method, the electronic device 310 may not simultaneously transmit a Wi-Fi signal for charging to the mobile terminal 350. Thus, when the electronic device 310 performs Wi-Fi communication, the electronic device 310 may detect the Wi-Fi communication as the event of the suspension of the charge signal transmission and may suspend the transmission of the charge signal.

For example, when the electronic device 310 is switched from a standby mode to another mode, for example, a normal mode or a sleep mode, the electronic device 310 may detect this switch as the event of suspension of the charge signal transmission. The sleep mode may configured to save more power than the standby mode and may denote a mode in which power is not applied to the communicator. When the electronic device 310 is switched from the standby mode to the normal mode, the electronic device 310 may perform Wi-Fi communication and output contents, etc. on a screen, and thus, the electronic device 310 may not transmit the Wi-Fi signal as the charge signal. Also, when the electronic device 310 is switched from the standby mode to the sleep mode, the communicator may not operate, and thus, the electronic device 310 may not transmit the Wi-Fi signal to the mobile terminal 350.

For example, when the electronic device 310 identifies that a remaining battery capacity of the mobile terminal 350 is greater than or equal to a specified value, based on a BLE signal that the electronic device 310 receives from the mobile terminal 350 while the electronic device 310 transmits the charge signal, the electronic device 310 may detect this identification as the event of suspension of the charge signal transmission.

For example, when the electronic device 310 identifies that a BLE signal strength from the mobile terminal 350 is less than or equal to a specified strength, based on a BLE signal that the electronic device 310 receives from the mobile terminal 350 while the electronic device 310 transmits the charge signal, the electronic device 310 may detect this identification as the event of suspension of the charge signal transmission.

When the electronic device 310 detects the event of suspension of the charge signal transmission in operation S1410, the electronic device 310 may suspend the transmission of the charge signal in operation S1420.

The electronic device 310 and the operating method thereof may also be implemented with a recording medium including instructions executable by a computer, such as a program module executable by the computer. Computer-readable media may be arbitrary media which may be accessed by computers and may include volatile and non-volatile media, and detachable and non-detachable media. The computer-readable media may include computer storage media and communication media. The computer storage media include all of volatile and non-volatile media, and detachable and non-detachable media which are designed as methods or techniques to store information including computer-readable instructions, data structures, program modules, or other data. The communication media include transmission mechanisms or other data of modulated data signals, such as computer-readable instructions, data structures, and program modules. The communication media include other information transmission media.

In this disclosure, a "unit" may refer to a hardware component, such as a processor or a circuit, and/or a software component executed by a hardware component such as a processor.

The electronic device 310 and the operating method thereof according to one or more of the embodiments described above may be implemented with a computer program product including a non-transitory computer-readable recording medium having recorded thereon a program for executing the operating method of the electronic device 310, the operating method including: determining whether or not to charge the mobile terminal 350, when the electronic device 310 is in a standby mode; and transmitting a charge signal to the mobile terminal 350 when the electronic device 310 determines to charge the mobile terminal 350, wherein the determining of whether or not to charge the mobile terminal 350 is performed using a BLE signal received from the mobile terminal 350.

While the disclosure has been particularly shown and described with reference to various example embodiments thereof, it will be understood that the various example embodiments are intended to be illustrative, not limiting. It will also be understood by one of ordinary skill in the art that various changes in form and detail may be made without departing from the true spirit and full scope of the disclosure, including the appended claims and their equivalents. Hence, it will be understood that the embodiments described above are examples in all aspects and are not limiting of the scope of the disclosure. For example, each of components described as a single unit may be executed in a distributed fashion, and likewise, components described as being distributed may be executed in a combined fashion. It will also be understood that any of the embodiment(s) described herein may be used in conjunction with any other embodiment(s) described herein.

## Claims

1. A method of operating an electronic apparatus, the operating method comprising:
determining whether to charge a mobile terminal, based on the electronic apparatus operating in a standby mode; and
transmitting a charge signal to the mobile terminal based on a determination to charge the mobile terminal,
wherein a Bluetooth low energy (BLE) signal received from the mobile terminal is used in the determining of whether to charge the mobile terminal.

2. The method of claim 1, wherein the determining of whether t to charge the mobile terminal comprises:
obtaining at least one of battery information or BLE signal strength information from the BLE signal; and
determining whether to charge the mobile terminal using the at least one of the battery information or the BLE signal strength information.

3. The method of claim 2, wherein the determining of whether to charge the mobile terminal using the battery information comprises, based on a remaining battery capacity based on the battery information being less than a specified amount, determining to charge the mobile terminal, and
the determining of whether to charge the mobile terminal using the BLE signal strength information comprises, based on a BLE signal strength based on the BLE signal strength information being greater than a specified strength, determining to charge the mobile terminal.

4. The method of claim 2, wherein the BLE signal comprises a first BLE signal received from the mobile terminal while the electronic device operates in a normal mode before the electronic device operates in the standby mode.

5. The method of claim 4, wherein the first BLE signal comprises a BLE signal received first from the mobile terminal after the electronic device is connected with the mobile terminal through a BLE communication network, while the electronic device operates in the normal mode.

6. The method of claim 2, wherein the BLE signal comprises a second BLE signal received from the mobile terminal while the electronic device operates in the standby mode.

7. The method of claim 2, further comprising: outputting a user interface screen configured to receive an input of selection with respect to whether or not to automatically charge the mobile terminal; and
receiving an input to automatically charge the mobile terminal from the user interface screen, wherein
the determining of whether to charge the mobile terminal is performed based on the input to automatically charge the mobile terminal.

8. The method of claim 2, wherein the transmitting of the charge signal comprises transmitting a Wi-Fi signal having an output level greater than or equal to a specified value.

9. The method of claim 8, further comprising adjusting the output level of the Wi-Fi signal based on the BLE signal strength information.

10. The method of claim 2, further comprising: setting, using a timer, a time at which the charge signal is transmitted; and
re-determining whether to continually transmit the charge signal to the mobile terminal, based on the time set using the timer elapsing.

11. The method of claim 2, further comprising: detecting an event of suspension of the charge signal transmission, while transmitting the charge signal; and
suspending the transmission of the charge signal based on the detection of the event of suspension of the charge signal transmission,
wherein the event of suspension of the charge signal transmission comprises one or more from among an event in which the electronic device performs Wi-Fi communication, an event in which the electronic device is switched from the standby mode to a different mode, an event in which a remaining battery capacity of the mobile terminal is identified to be greater than or equal to a specified amount, and an event in which a strength of the BLE signal from the mobile terminal is identified to be less than or equal to a specified strength.

12. An electronic device comprising:
a communicator comprising communication circuitry;
a memory storing one or more instructions; and
a processor configured to execute the one or more instructions stored in the memory,
wherein the electronic device is configured to:
determine whether to charge a mobile terminal, based on the electronic apparatus operating in a standby mode; and transmit a charge signal to the mobile terminal, based on determining to charge the mobile terminal,
wherein the electronic device is further configured to determine whether to charge the mobile terminal using a Bluetooth low energy (BLE) signal received from the mobile terminal.

13. The electronic device of claim 12, wherein the electronic device is configured to obtain at least one of battery information or BLE signal strength information from the BLE signal, and
to determine whether to charge the mobile terminal using the at least one of the battery information or the BLE signal strength information.

14. The electronic device of claim 13, wherein based on the electronic device determining whether to charge the mobile terminal using the battery information, the electronic device is further configured to determine to charge the mobile terminal, based on a remaining battery capacity based on the battery information being less than a specified amount, and
based on the electronic device determining whether to charge the mobile terminal using the BLE signal strength information, the electronic device is further configured to determine to charge the mobile terminal, based on a BLE signal strength based on the BLE signal strength information being greater than a specified strength.

15. A non-transitory computer-readable recording medium having recorded thereon a program which, when executed, causes an electronic device to perform at least one operation, the at least one operation comprising:
determining whether to charge a mobile terminal based on the electronic apparatus operating in a standby mode; and
transmitting a charge signal to the mobile terminal based on determining to charge the mobile terminal,
wherein a Bluetooth low energy (BLE) signal received from the mobile terminal is used in the determining of whether to charge the mobile terminal.
